# EUROPEAN PATENT SPECIFICATION

(11) **EP 1 298 184 B1**
(45) Date of publication and mention of the grant of the patent: **22.11.2006**
(21) Application number: 02019511.1
(22) Date of filing: 31.08.2002
(51) Int. Cl.: C09K 19/12, C09K 19/30, C09K 19/34, G02F 1/13

(54) **Liquid crystalline medium and liquid crystal display**
Flüssigkristallines Medium und Flüssigkristallanzeige
Milieu liquide cristallin et affichage à cristaux liquides

(30) Priority: 28.09.2001 EP 01123436
(43) Date of publication of application: 02.04.2003
(73) Proprietor: Merck Patent GmbH, 64293 Darmstadt (DE)
(72) Inventor: Nakajima, Shinji, Atsugi-shi, Kanagawa-Pref. (JP); Sugiyama, Yasushi, Atsugi-city, Kanagawa Pref. 243-0303 (JP); Tanaka, Yukiomi, Ayase city, Kanagawa Pref. 252-1121 (JP); Takeda, Takanori, Atsugi-shi, Kanagawa Pref. (JP); Ichinose, Hideo, Odawara-shi, Kanagawa Pref. 250-0034 (JP)

(56) References cited:
- EP-A- 0 808 825
- EP-A- 0 844 229
- WO-A-01/25370
- WO-A-01/46336
- DE-A- 10 152 831

## Description

The present invention relates to liquid crystalline media and to liquid crystal displays comprising these media, especially to displays addressed by an active matrix and in particular to displays of the In Plane Switching (IPS) type .

### Problem to be solved and state of the art

Liquid Crystal Displays (LCDs) are widely used to display information. Electro-optical modes employed are e.g. the twisted nematic (TN)-, the super twisted nematic (STN)-, the optically compensated bend (OCB)- and the electrically controlled birefringence (ECB)-mode with their various modifications, as well as others. Besides these modes, which all do use an electrical field, which is substantially perpendicular to the substrates, respectively to the liquid crystal layer, there are also electro-optical modes employing an electrical field substantially parallel to the substrates, respectively the liquid crystal layer, like e.g. the In-Plane Switching mode (as disclosed e.g. in DE 40 00 451 and EP 0 588 568). Especially this electrooptical mode is used for LCDs for modern desk top monitors and is envisaged to be applied for displays for multi media applications. The liquid cystals according to the present invention are preferrably used in this type of displays.

For these displays new liquid crystalline media with improved properties are required. Especially the dilectric anisotropy (Δε) should be high enough to allow a reasonably low operation voltage. Preferably Δε should be higher than 7 and very preferably preferably be higher than 10, preferably, however, not higher than 25 and in particular not higher than 20. Otherwise the resistivity of the mixtures tends to become inacceptably low even for IPS displays, which do have slightly less stringent requirements in this respect than TN-AMDs. Besides this parameter, the media have to exhibit a suitably wide range of the nematic phase, a rather small birefingence (Δn), a rather small rotational viscosity and, as mentioned above, an at least moderately high specific resistivity.

The displays according to the present invention are preferably addressed by an active matrix (active matrix LCDs, short AMDs), preferably by a matrix of thin film transistors (TFTs). However, the inventive liquid crystals can also beneficiously be used in displays with other known addressing means.

There are various different display modes using composite systems of liquid crystal materials of low molecular weight together with polymeric materials such as e.g. polymer dispersed liquid crystal (PDLC)-, nematic curvilinearily aligned phase (NCAP)- and polymer network (PN)-systems, as disclosed for example in WO 91/05 029 or axially symmetric microdomain (ASM) systems and others. In contrast to these, the modes especially preferred according to the instant invention are using the liquid crystal medium as such, oriented on surfaces. These surfaces typically are pretreated to achieve uniform alignment of the liquid crystal material The display modes according to the instant invention preferably use an electrical field substantially parallel to the composite layer.

LCDs are used for direct view displays, as well as for projection type displays.

Liquid crystal media for use in displays are disclosed e.g. im WO 01/46336 A2.

Liquid crystal compositions suitable for LCDs and especially for IPS displays are known e. g. from JP 07-181 439 (A), EP 0 667 555, EP 0 673 986, DE 195 09 410, DE 195 28 106, DE 195 28 107, WO 96/23 851 and WO 96/28 521. These compositions, however, do have significant drawbacks. Most of them have, amongst other deficiencies, too low values of the resistivity and/or require operation voltages which are too high. Many of them also lead to unfavourably long response times.

Thus, there is a significant need for liquid crystalline media with suitable properties for practical applications such as a wide nematic phase range, low viscosities, appropriate optical anisotropy Δn, according to the display mode used, and especially a high Δε.

### Present invention

Surprisingly, it now has been found that liquid crystalline media with a suitably high Δε, a suitable phase range, and a suitable Δn can be realized, which do not exhibit the drawbacks of the materials of the prior art or at least do exhibit them to a significantly lesser degree.

These improved liquid crystalline media according to the instant application are comprising at least the following components:
a dielectrically positive component A with Δε > 3.0 comprising one or more dielectrically positive compounds of formula I 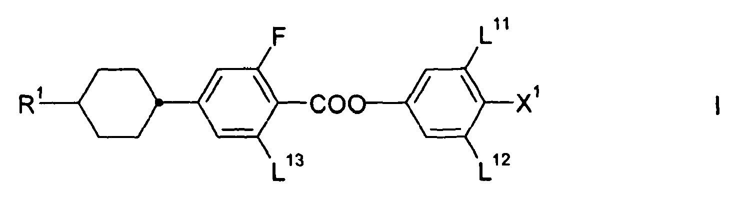 wherein
- R¹: is alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms,
- X¹: is F or fluorinated alkyl or fluorinated alkoxy, each with 1 to 4 C-atoms,
- L¹¹, L¹² and L¹³: are, independently of each other, H or F and
one or more dielectrically positive compounds of formula II and one or more dielectrically positive compounds of formula III 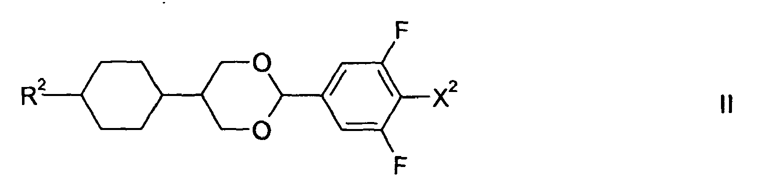 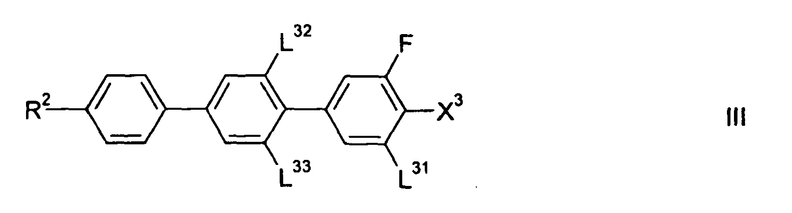 wherein
- R² and R³: independently of each other, are alkyl, alkoxy, fluorinated alkyl or fluorinated alkoxy with 1 to 7 C- atoms, alkenyl, alkenyloxy, alkoxyalkyl or fluorinated alkenyl with 2 to 7 C-atoms,
- X² and X³: independently of each other, are F or fluorinated alkyl or fluorinated alkoxy, each with 1 to 4 C-atoms,
- L³¹, L³² and L³³: are, independently of each other, H or F and

- optionally a dielectrically neutral component, component B, and
- also optionally a dielectrically negative component, component C.

Preferably the compounds of formula II are selected from formula IIa 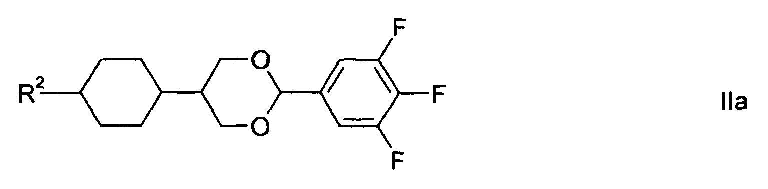 wherein R² has the meaning given in formula II.

Preferably the compounds of formula III are selected from the group of compounds of formulae IIIa to IIIc 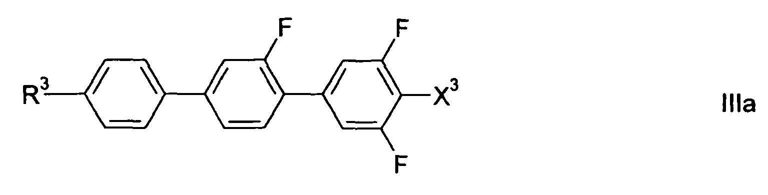 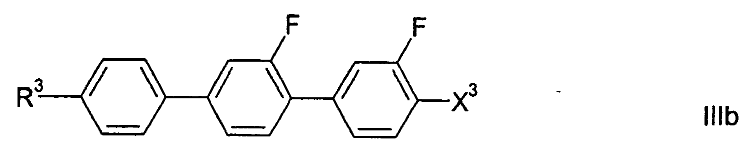 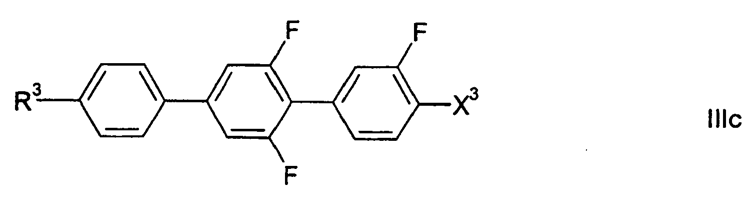 wherein R³ and X³ have the meaning given in formula III and X³ is preferably F.

Preferably the liquid crystral mixtures according to the present invention comprise a component A which, in addition to the compounds of formula I, II and/or III comprise one or more compounds of formula IV 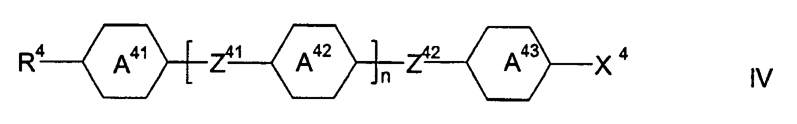 wherein 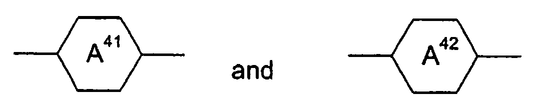 independently of each other, and in case 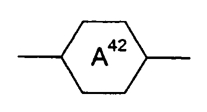 is present twice, also these, independently of each other, are 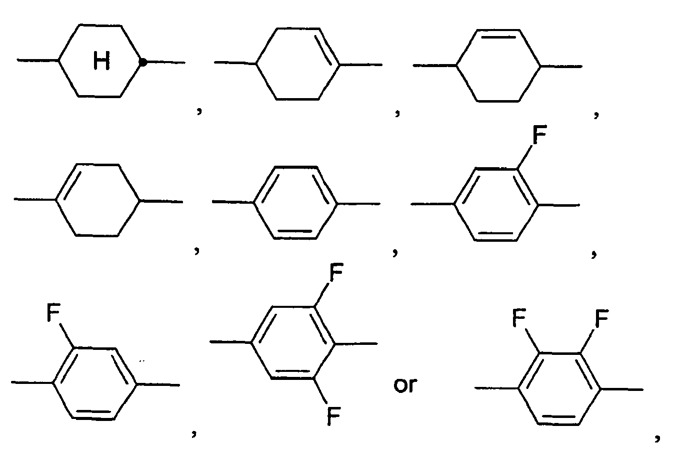 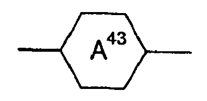 is 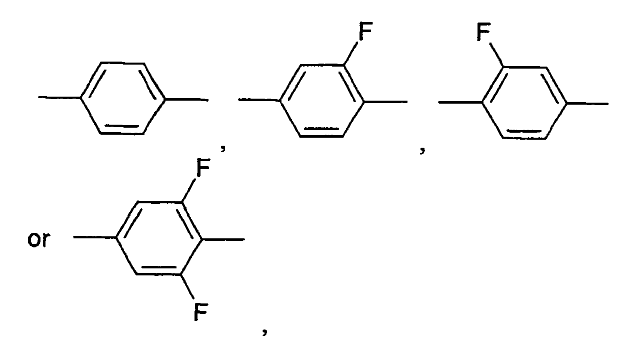 preferably at least one of 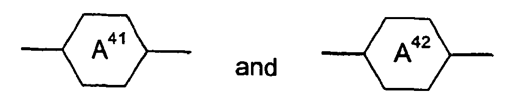 is 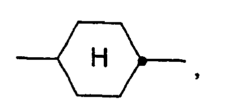 and preferably 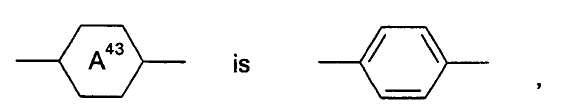 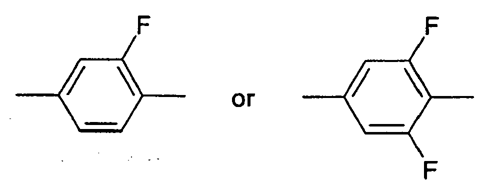
- Z⁴¹ and Z⁴²: are, independently of each other, and in case Z⁴¹ is present twice, also these independently of each other, - CH₂CH₂-, -COO-, trans- CH=CH-, trans- -CF=CF-, - CH₂O-, -CF₂O- or a single bond, preferably at least one of them is a single bond and most preferably, if present, at least two of them are a single bond,
- X⁴: is F, Cl halogenated alkyl, halogenated alkoxy, halogenated alkenyl or halogenated alkenyloxy, wherein halogenated preferably is fluorinated and/or chlorinated, preferably fluorinated and preferably X⁴ is F, OCF₃ or OCF₂H,
- R⁴: has the meaning given for R¹ under formula I, above
- n: is 0, 1 or 2, preferably 0 or 1.

Especially preferred component A comprises, preferably predominantly consists of and most preferably entirely consists of compounds selected from the group of compounds of formulae I to IV.

Preferably the liquid crystal mixtures according to the present invention do contain at least one further component besides component A. This second component may be component B or component C, preferably the second component present is component B.

Obviously the mixtures according to the present invention also can contain the third one of these components, component C or B as the case may be.

Preferably the liqiud crystral mixtures according to the present invention comprise a dielectrically neutral component (component B). This component has a dielectrical anisotropy in the range from -1.5 to +3 and consists of compounds which have values in this range. Preferably it comprises, preferably predominantly consists of and most preferably entirely consists of compounds of formula V 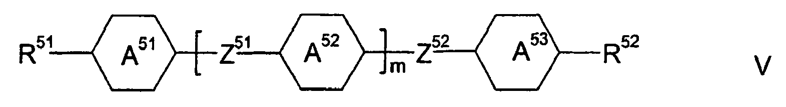 wherein
- R⁵¹ and R⁵² ,: independently of each other, have the meaning given for R¹ under formula I above, 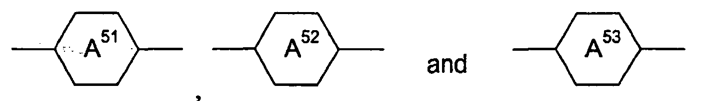
independently of each other, and in case 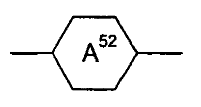 is present twice, also these, independently of each other, are 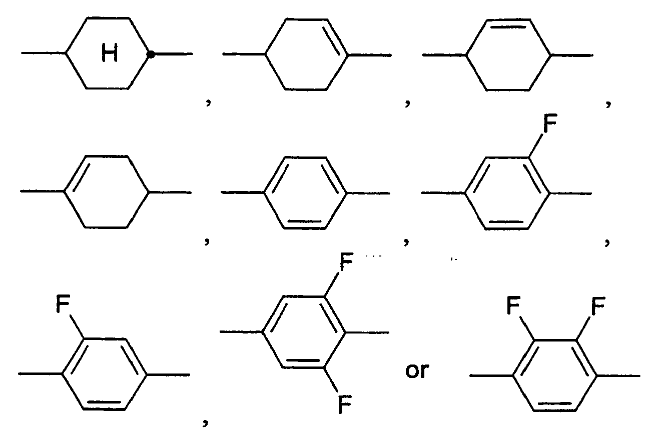 preferably at least one of 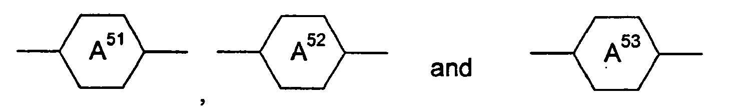 is 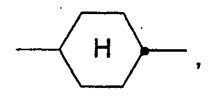
- Z⁵¹ and Z⁵²: are, independently of each other, and in case Z⁵¹ is present twice, also these independently of each other, -CH₂CH₂-, -COO-, trans- CH=CH-, trans- -CF=CF-, - CH₂O-, -CF₂O- or a single bond, preferably at least one of them is a single bond and most preferably, if present, at least two of them are a single bond,
- m: is 0, 1 or 2.

In a preferred embodiment of the present invention the liquid crystal mixtures according to the present invention comprise one or more compounds of formula IV selected from the group of compounds of formulae IVa to IVd. 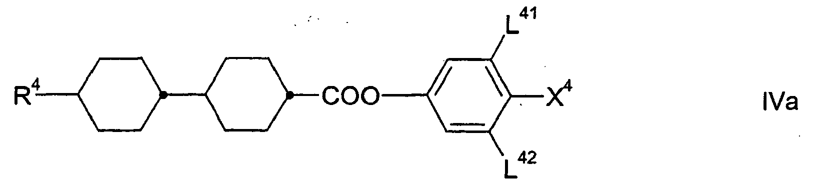 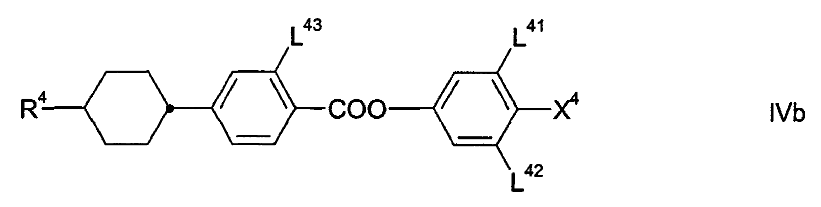 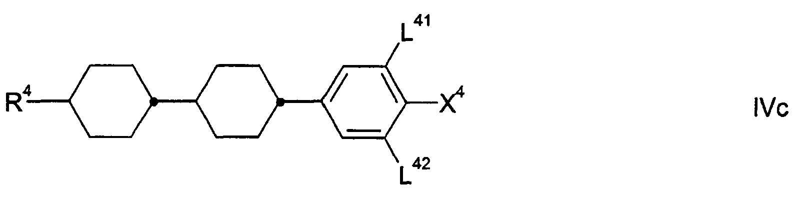 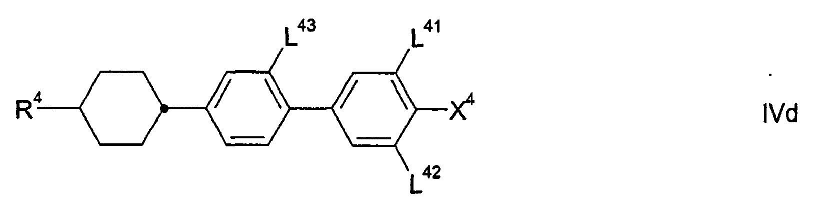 wherein
- R⁴: is as defined in formula IV,
- X⁴: independently of each other, is F, Cl or fluorinated alkyl or fluorinated alkoxy, each with 1 to 4 C-atoms or fluorinated alkenyl or fluorinated alkenyloxy, each with 2 to 4 C-atoms, preferably F, OCF₃ or OCF₂H,
- L⁴¹, L⁴² and L⁴³: are, independently of each other, H or F, preferably at least one of them is F.

Especially prefered are liquid crystal mixtures containing one or more compounds selected from the group of compounds of formulae IVa-1 to IVa-4, IVb-1 to IVb-4, IVc-1 to IVc-5 and IVd-1 to and IVd-8 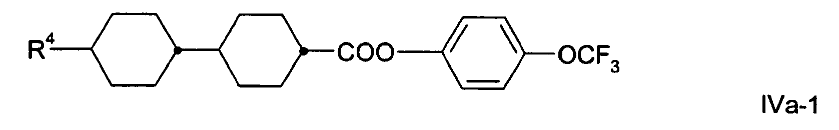 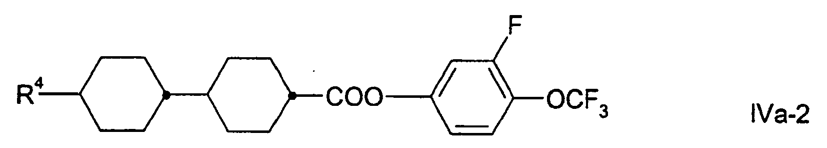 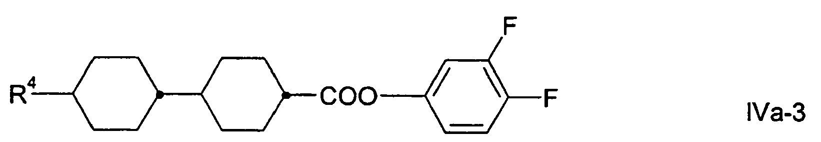 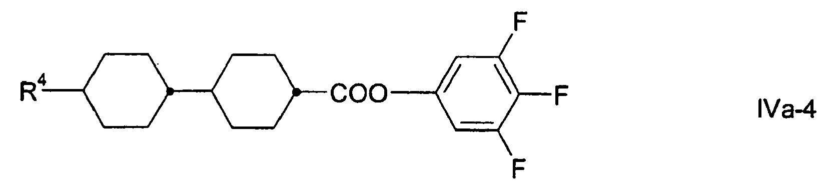 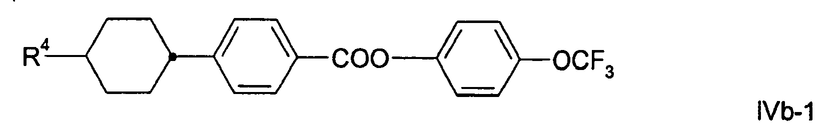 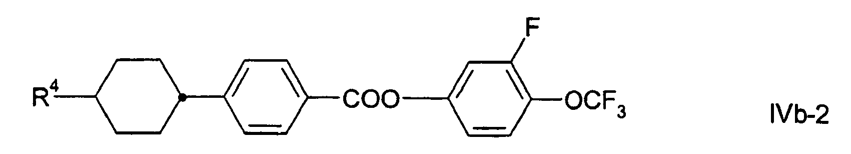 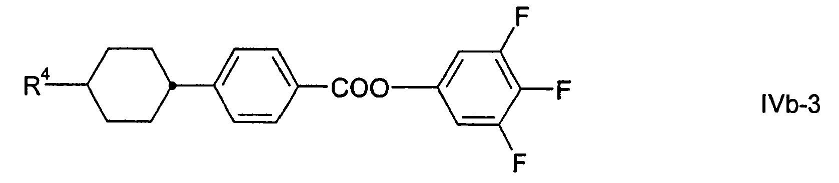 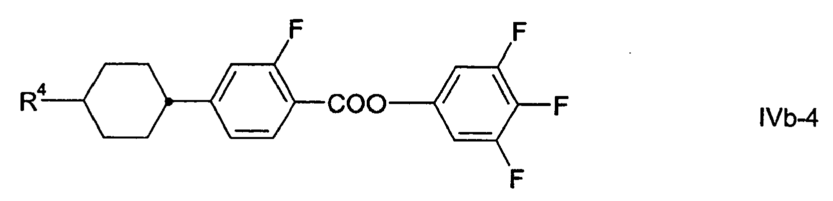 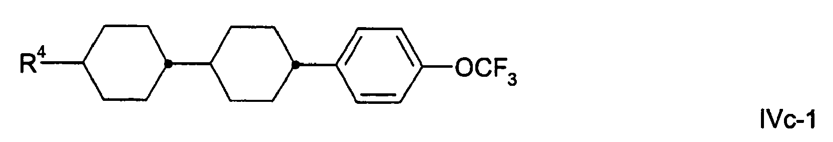 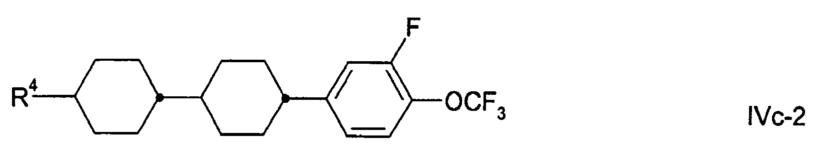 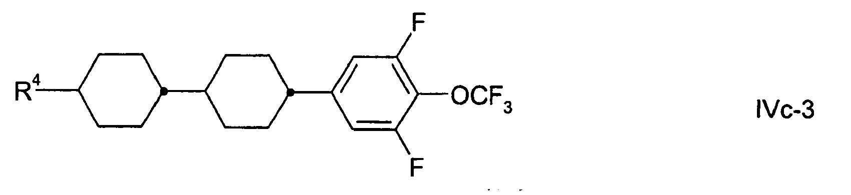 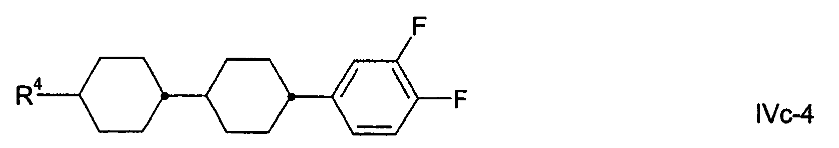 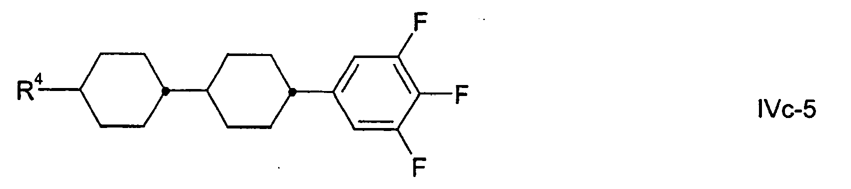 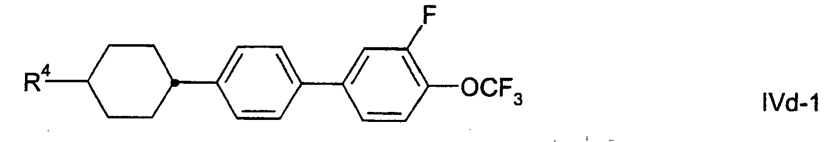 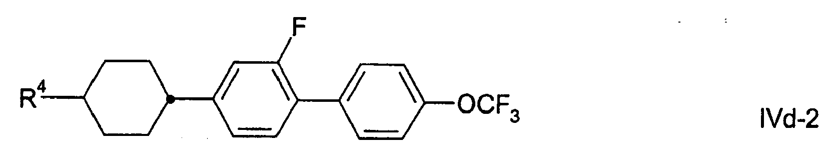 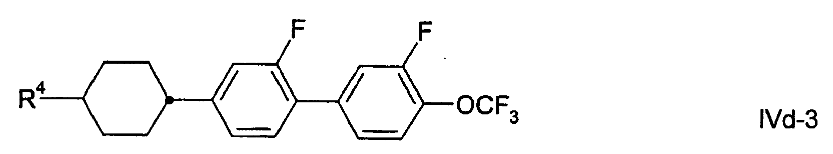 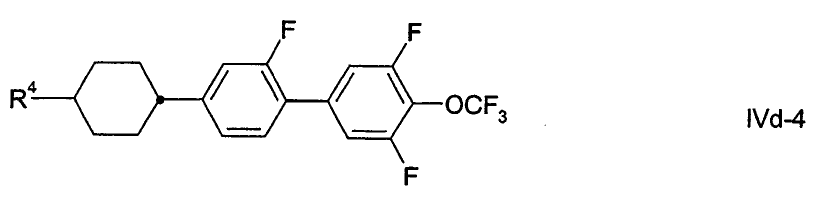 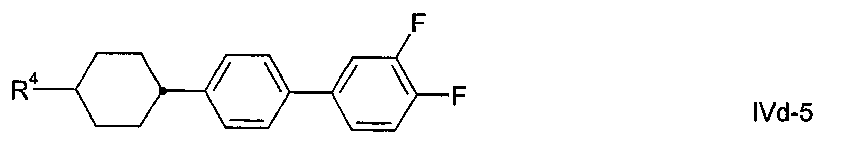 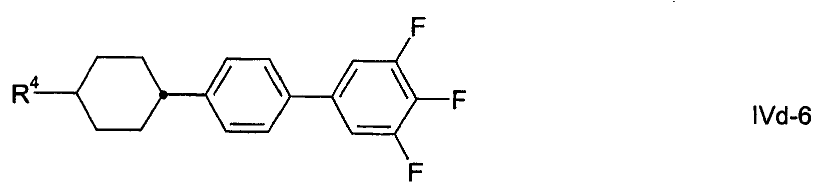 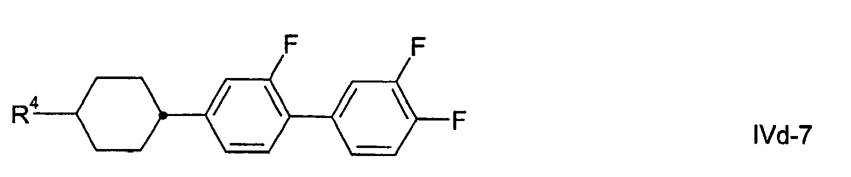 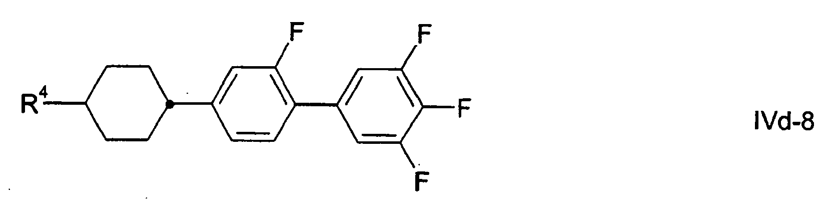 wherein
- R⁴: has the meaning given under formula IV above and preferably is alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms.

In a further preferred embodiment of the present invention, which may be the same embodiment as the one mentioned above or a different one, the liquid crystal mixtures according to the present invention comprise component B comprising, preferably predominantly consisting of and most preferably entirely consisting of compounds of formula V selected from the group of compounds of formulae Va to Vc and further optionally containing compounds selected from formulae Vd to Vg 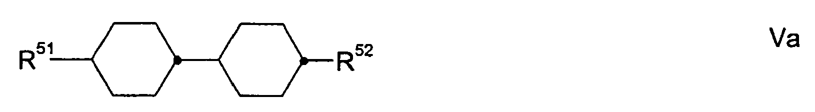 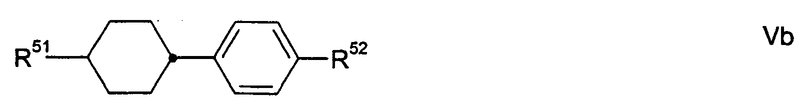 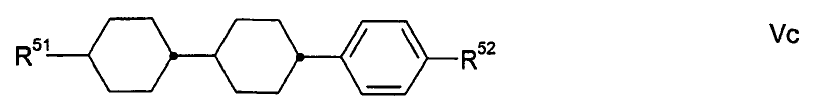 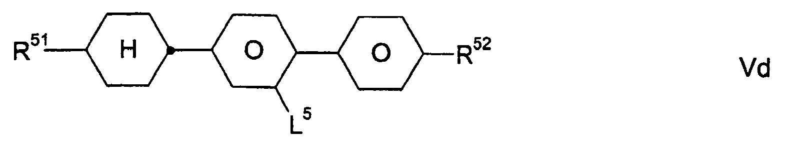 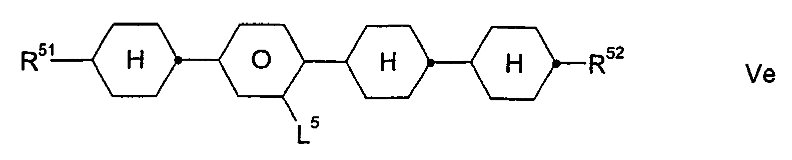 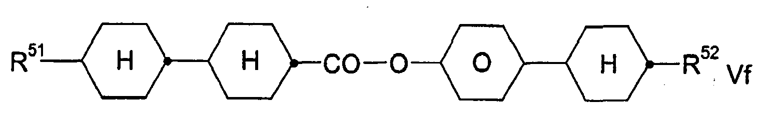 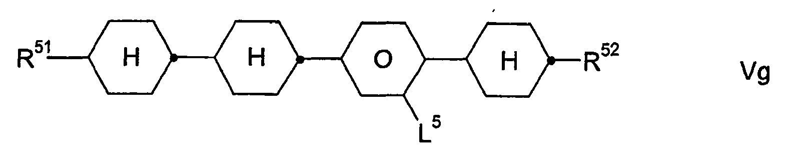 wherein
- R⁵¹ and R⁵²: are, independently of each other, alkyl, alkoxy, fluorinated alkyl or fluorinated alkoxy with 1 to 7 C- atoms, alkenyl, alkenyloxy, alkoxyalkyl or fluorinated alkenyl with 2 to 7 C-atoms and
- L⁵: is H or F.

Preferably the liqiud crystal mixture contains one or more compounds selected from the following group of compounds
- compounds of formula Va, wherein R⁵¹ and R⁵² are alkyl,
- compounds of formula Va, wherein R⁵¹ is alkyl and R⁵² is alkoxy,
- compounds of formula Va, wherein R⁵¹ is alkyl and R⁵² is alkenyl,
- compounds of formula Vb, wherein R⁵¹ and R⁵² are alkyl,
- compounds of formula Vb, wherein R⁵¹ is alkyl and R⁵² is alkoxyl,
- compounds of formula Vc, wherein R⁵¹ and R⁵² are alkyl,
- compounds of formula Vc, wherein R⁵¹ is alkyl and R⁵² is alkoxyl and
- compounds of formula Vc, wherein R⁵¹ is alkyl and R⁵² is alkenyl.
- Especially preferred liquid crystal mixtures comprise one or more compounds of formulae Va besides one or more compounds selected from the group of formulae Vb and Vc, especially preferred are mixtures containing compounds of formula Va, wherein R⁵¹ is alkyl and R⁵² is alkoxy,

Additionally the liquid crystal mixtures according to the present invention may comprise a further optional component (component C) which has a negative dielectrical anisotropy and consists of dielectrically negative compounds of formula VI 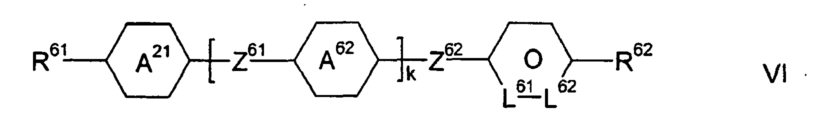 wherein
- R⁶¹ and R⁶²: independently of each other have the meaning given for R¹ under formula I above, 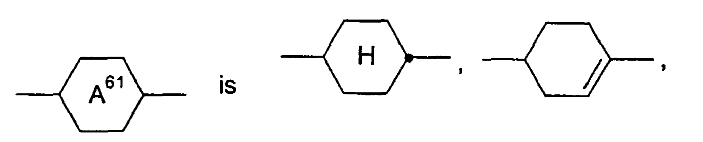 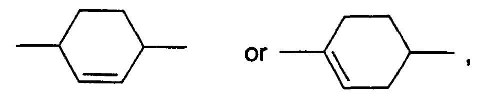
preferably 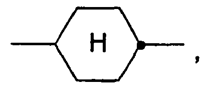 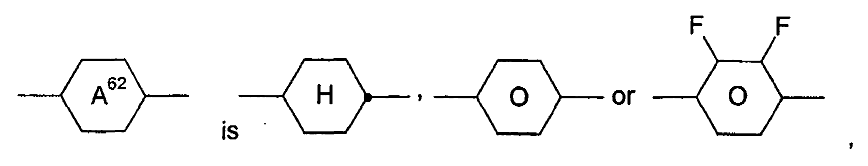
- Z⁶¹ and Z⁶²: are, independently of each other, -CH₂CH₂-, -COO-, trans- CH=CH-, trans- -CF=CF-, -CH₂O-, -CF₂O- or a single bond, preferably at least one of them is a single bond and most preferably both are a single bond,
- L⁶¹ and L⁶²: are, independently of each other, C-F or N, preferably at least one one of them is C-F and most preferably both of them are C-F and
- k: is 0 or 1.

Preferably the liquid crystalline media according to the instant invention comprise, preferably predominantly consist of and most preferably entirely consist of components A to C and in particular of compounds selected from the group of compounds of formulae I to VI. Comprising in this application means in the context of compositions that the entity referred to, e.g. the medium or the component, contains the component or components or of the compound or compounds in question, preferably in a total concentration of 10 % or more and most preferably of 20 % or more.

Predominantly consisting, in this context, means that the entity referred to contains 55 % or more, preferably 60 % or more and most preferably 70 % or more of the component or components or of the compound or compounds in question.

Essentially consisting, in this context, means that the entity referred to contains 80 % or more, preferably 90 % or more and most preferably 95 % or more of the component or components or of the compound or compounds in question.

Entirely consisting, in this context, means that the entity referred to contains 98 % or more, preferably 99 % or more and most preferably 100.0 % of the component or components or of the compound or compounds in question.

Component C preferably comprises, preferably predominantly consists of and most preferably entirely consists of one or more compounds selected from the group of compounds of formulae VIa to Vlc 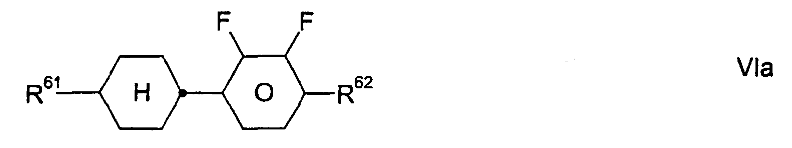 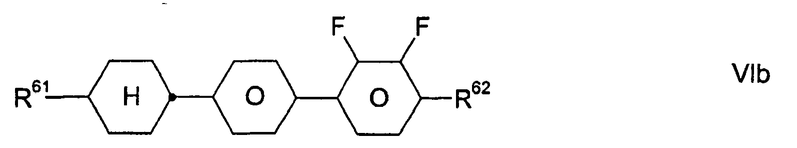 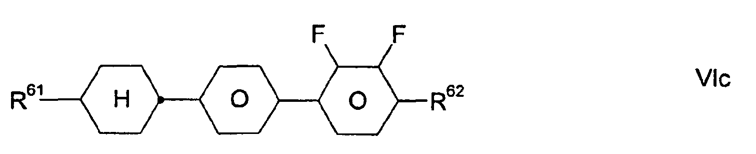 wherein
R⁶¹ and R⁶² have the respective meanings given under formula VI above. In formulae VIa to VIc R⁶¹ preferably is n-alkyl or 1-E-alkenyl and R⁶² preferably is n-alkyl or alkoxy.

Also other mesogenic compounds, which are not explicitly mentioned above, can optionally and beneficiously be used in the media according to the instant invention. Such compounds are known to the expert in the field.

Component A preferably is used in a concentration from 20 to 100 %, preferably from 50 to 95 %, preferably from 60 to 90 %, and most preferably from 70 to 80 % of the total mixture.

Component B preferably is used in a concentration from 0 to 50 %, preferably from 10 to 35 % and most preferably from 20 to 30 % of the total mixture.

Component C preferably is used in a concentration from 0 to 30 %, preferably from 0 to 20 % and most preferably from 5 to 15 % of the total mixture.

Optionally, the inventive media can comprise further liquid crystal compounds in order to adjust the physical properties. Such compounds are known to the expert. Their concentration in the media according to the instant invention is preferably 0 % to 30 %, more preferably 0 % to 20 % and most preferably 5 % to15 %.

Preferably the liquid crystal medium contains 50 % to 100 %, more preferably 70 % to 100 % and most preferably 80 % to 100 % and in particular 90 % to 100 % totally of components A, B and C, which contain, preferably predominantly consist of and most preferalby entirely consist of one or more of compounds of formulae I, II, III, IV, V and VI, respectively.

The liquid crystal media according to the instant invention are characterized by a clearing point of 65 °C or more, preferably of 70 °C or more and in particular of 75 °C or more.
The Δn of the liquid crystal media according to the instant invention is 0.11 or less, preferably in the range of 0.070 to 0.135, more preferably in the range of 0.080 to 0.125, most preferably in the range of 0.090 to 0.115 and in particular in the range of 0.095 to 0.110.

The Δε, at 1 kHz and 20 °C, of the liquid crystal medium according to the invention is 8.0 or more, preferably 10.0 or more, most preferably 12.0 or more and in particular 12.5 to 18.0.

Preferably the nematic phase of the inventive media extends at least from 0 °C to 70 °C, more preferably at least from -20 °C to 70 °C, most preferably at least from -30 °C to 75 °C and in particular at least from - 40 °C to 75 °C, wherein at least means that preferably the lower limit is under cut, wherein the upper limit is surpassed.

In the present application the term dielectrically positive means compounds or components with Δε > 3.0, dielectrically neutral with -1,5 ≤ Δε ≤ 3.0 and dielectrically negative with Δε < -1,5. Δε is determined at 1 kHz and 20 °C. The dielectrical anisotropies of the compounds is determined from the results of a solution of 10 % of the individual compounds in a nematic host mixture. The capacities of these test mixtures are determined both in a cell with homeotropic and with homogeneous alignment. The cell gap of both types of cells is approximately 10 µm. The voltage applied is a rectangular wave with a frequency of 1 kHz and a root mean square value typically of 0.5 V to 1.0 V, however, it is always selected to be below the capacitive threshold of the respective test mixture.

For dielectrically positive compounds the mixture ZLI-4792 and for dielectrically neutral, as well as for dielectrically negative compounds, the mixture ZLI-3086, both of Merck KGaA, Germany are used as host mixture, respectively. The dielectric permittivities of the compounds are determined from the change of the respective values of the host mixture upon addition of the compounds of interest and are extrapolated to a concentration of the compounds of interest of 100 %.
Components having a nematic phase at the measurement temperature of 20 °C are measured as such, all others are treated like compounds.

The term threshold voltage refers in the instant application to the optical threshold and is given for 10 % relative contrast (V₁₀) and the term saturation voltage refers to the optical saturation and is given for 90 % relative contrast (V₉₀) both, if not explicitly stated otherwise. The capacitive threshold voltage (V₀, also called Freedericksz-threshold V_{Fr}) is only used if explicitly mentioned.

The ranges of parameters given in this application are all including the limiting values, unless explicitly stated otherwise.

Throughout this application, unless explicitly stated otherwise, all concentrations are given in mass percent and relate to the respective complete mixture, all temperatures are given in degrees centigrade (Celsius) and all differences of temperatures in degrees centigrade. All physical properties have been and are determined according to "Merck Liquid Crystals, Physical Properties of Liquid Crystals", Status Nov. 1997, Merck KGaA, Germany and are given for a temperature of 20 °C, unless explicitly stated otherwise. The optical anisotropy (Δn) is determined at a wavelength of 589.3 nm. The dielectric anisotropy (Δε) is determined at a frequency of 1 kHz. The threshold voltages, as well as all other electro-optical properties have been determined with test cells prepared at Merck KGaA, Germany. The test cells for the determination of Δε had a cell gap of 22 µm. The electrode was a circular ITO electrode with an area of 1.13 cm² and a guard ring. The orientation layers were lecithin for homeotropic orientation (ε ∥) and polyimide AL-1054 from Japan Synthetic Rubber for homogeneuous orientation (ε_{⊥}). The capacities were determined with a frequency response analyser Solatron 1260 using a sine wave with a voltage of 0.3 Vᵣₘₛ. The light used in the electro-optical measurements was white light. The set up used was a commercially available equipment of Otsuka, Japan. The characteristic voltages have been determined under perpendicular observation. The threshold (V₁₀) - mid grey (V₅₀) - and saturation (V₉₀) voltages have been determined for 10 %, 50 % and 90 % relative contrast, respectively.

The liquid crystal media according to the present invention can contain further additives and chiral dopants in usual concentrations. The total concentration of these further constituents is in the range of 0 % to 10 %, preferably 0.1 % to 6 %, based on the total mixture. The concentrations of the individual compounds used each are preferably in the range of 0.1 % to 3 %. The concentration of these and of similar additives is not taken into consideration for the values and ranges of the concentrations of the liquid crystal components and compounds of the liquid crystal media in this application.

The inventive liquid crystal media according to the present invention consist of several compounds, preferably of 3 to 30, more preferably of 8 to 20 and most preferably of 10 to 16 compounds. These compounds are mixed in conventional way. As a rule, the required amount of the compound used in the smaller amount is dissolved in the compound used in the greater amount. In case the temperature is above the clearing point of the compound used in the higher concentration, it is particularly easy to observe completion of the process of dissolution. It is, however, also possible to prepare the media by other conventional ways, e. g. using so called pre-mixtures, which can be e. g. homologous or eutectic mixtures of compounds or using so called multi-bottle-systems, the constituents of which are ready to use mixtures themselves.

By addition of suitable additives, the liquid crystal media according to the instant invention can be modified in such a way, that they are usable in all known types of liquid crystal displays, either using the liquid crystal media as such, like TN-, TN-AMD, ECB-AMD, VAN-AMD, IPS and OCB LCDs and in particular in composite systems, like PDLC, NCAP, PN LCDs and especially in ASM-PA LCDs.

The melting point T(C,N), the transition from the smectic (S) to the nematic (N) phase T(S,N) and the clearing point T (N,I) of the liquid crystals are given in degrees centigrade.

In the present application and especially in the following examples, the structures of the liquid crystal compounds are represented by abbreviations also called acronyms. The transformation of the abbreviations into the corresponding structures is straight forward according to the following two tables A and B. All groups CₙH₂ₙ₊₁ and CₘH₂ₘ₊₁ are straight chain alkyl groups with n respectively m C-atoms. The interpretation of table B is self evident. Table A does only list the abbreviations for the cores of the structures. The individual compounds are denoted by the abbreviation of the core followed by a hyphen and a code specifying the substituents R¹, R², L¹ and L² follows:

| Code for R¹, R², L¹, L² | R¹ | R² | L¹ | L² |
|---|---|---|---|---|
| nm | CₙH₂ₙ₊₁ | CₘH₂ₘ₊₁ | H | H |
| nom | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | H | F |
| nN.F.F | CₙH₂ₙ₊₁ | CN | F | F |
| nF | CₙH₂ₙ₊₁ | F | H | H |
| nF.F | CₙH₂ₙ₊₁ | F | H | F |
| nF.F.F | CₙH₂ₙ₊₁ | F | F | F |
| nOF | OCₙH₂ₙ₊₁ | F | H | H |
| nCl | CₙH₂ₙ₊₁ | Cl | H | H |
| nCl.F | CₙH₂ₙ₊₁ | Cl | H | F |
| nCl.F.F | CₙH₂ₙ₊₁ | Cl | F | F |
| nCF₃ | CₙH₂ₙ₊₁ | CF₃ | H | H |
| nCF₃.F | CₙH₂ₙ₊₁ | CF₃ | H | F |
| nCF₃.F.F | CₙH₂ₙ₊₁ | CF₃ | F | F |
| nOCF₃ | CₙH₂ₙ₊₁ | OCF₃ | H | H |
| nOCF₃.F | CₙH₂ₙ₊₁ | OCF₃ | H | F |
| nOCF₃.F.F | CₙH₂ₙ₊₁ | OCF₃ | F | F |
| nOCF₂ | CₙH₂ₙ₊₁ | OCHF₂ | H | H |
| nOCF₂.F | CₙH₂ₙ₊₁ | OCHF₂ | H | F |
| nOCF₂.F.F | CₙH₂ₙ₊₁ | OCHF₂ | F | F |
| nS | CₙH₂ₙ₊₁ | NCS | H | H |
| nS.F | CₙH₂ₙ₊₁ | NCS | H | F |
| nS.F.F | CₙH₂ₙ₊₁ | NCS | F | F |
| rVsN | CᵣH₂ᵣ₊₁-CH=CH-CₛH₂ₛ- | CN | H | H |
| rEsN | CᵣH₂ᵣ₊₁-O-CₛH₂ₛ- | CN | H | H |
| nAm | CₙH₂ₙ₊₁ | COOCₘH₂ₘ₊₁ | H | H |

**Table A:**

| | |
|---|---|
| 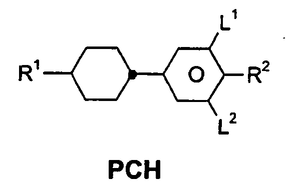 | 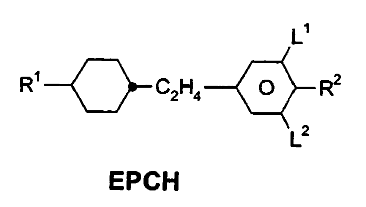 |
| 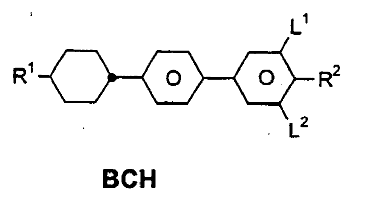 | 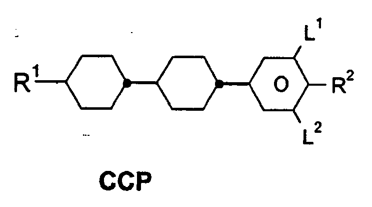 |
| 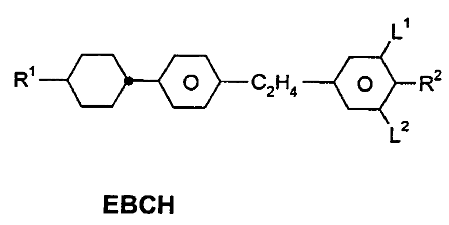 | 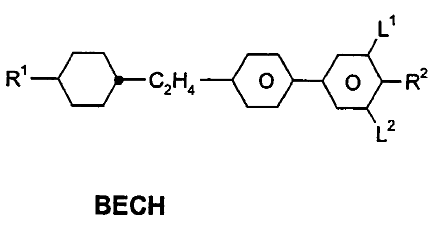 |
| 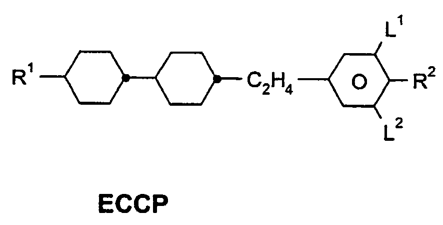 | 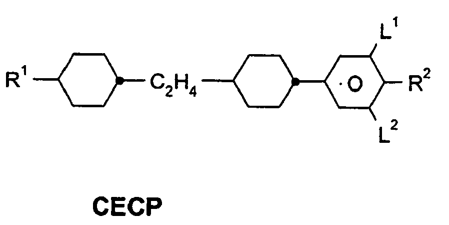 |
| 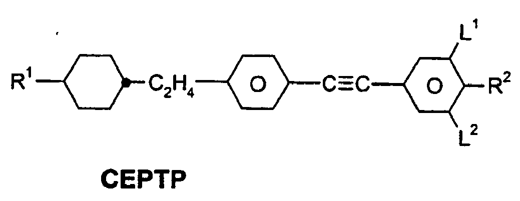 | 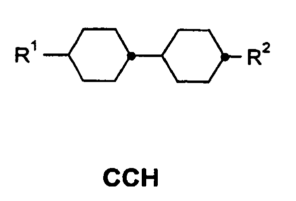 |
| 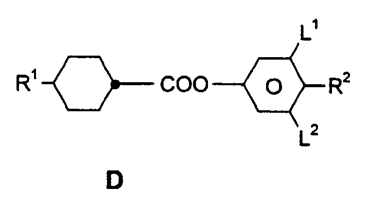 | 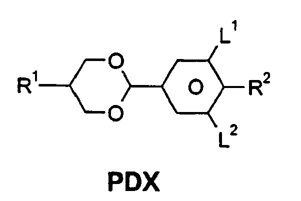 |
| 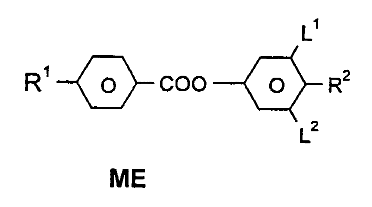 | 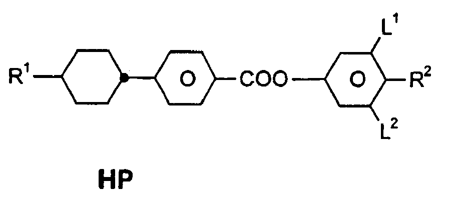 |
| 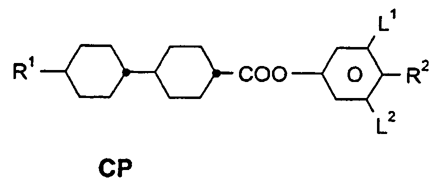 | |
| 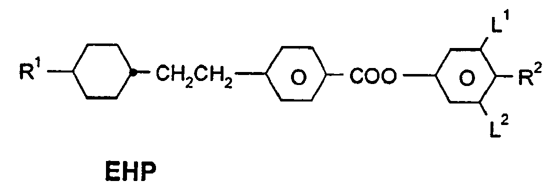 | |

**Table B:**

| | |
|---|---|
| 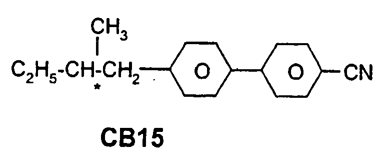 | 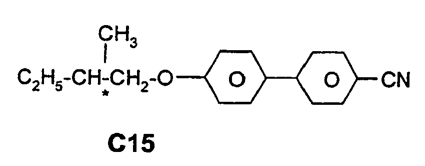 |
| 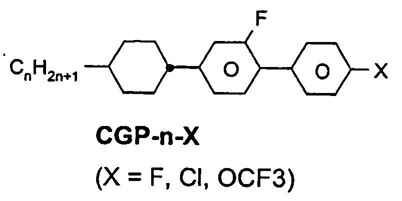 | 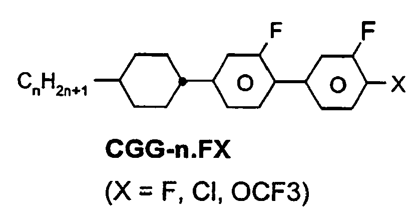 |
| 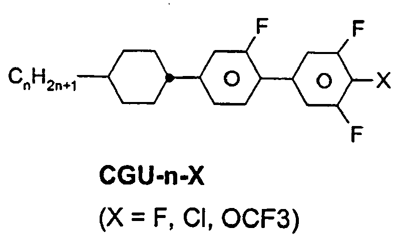 | 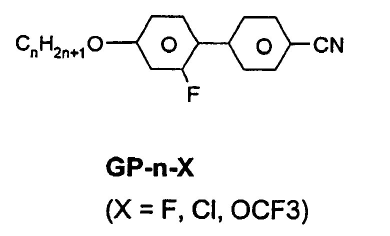 |
| 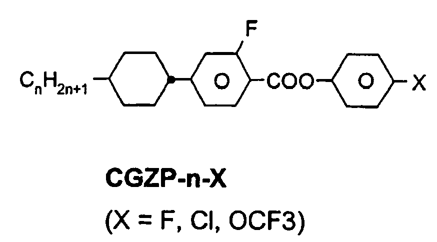 | 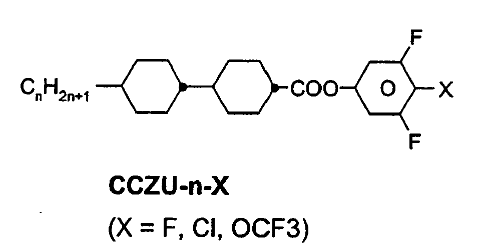 |
| 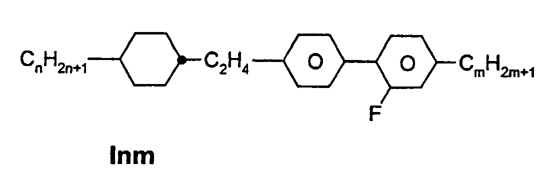 | |
| 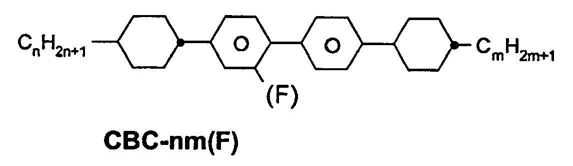 | |
| 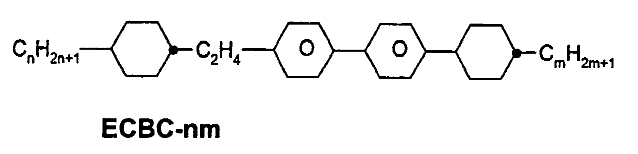 | |
| 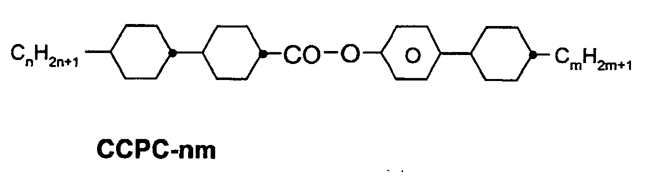 | |
| 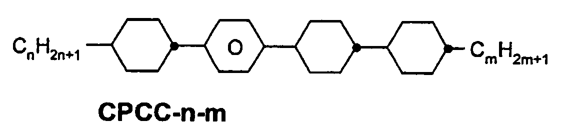 | |
| 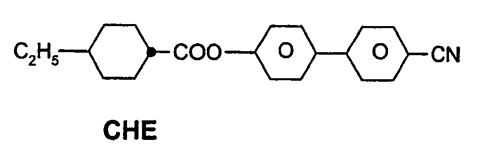 | |
| 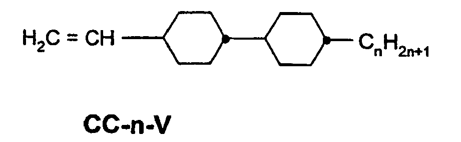 | |
| 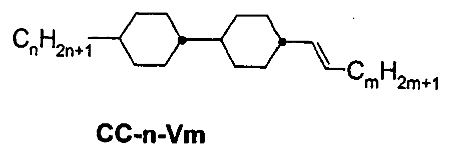 | |
| 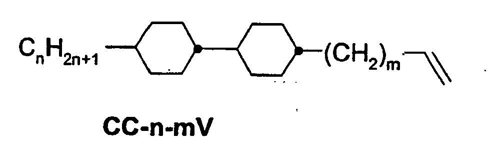 | |
| 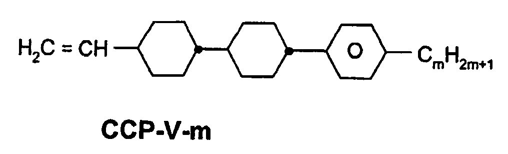 | |
| 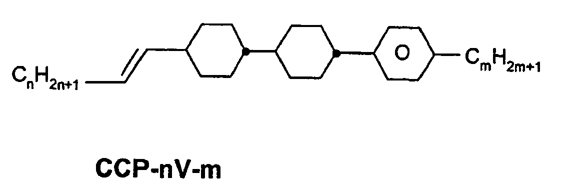 | |
| 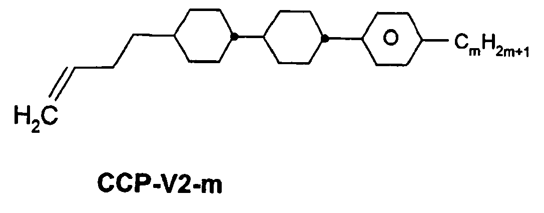 | |
| 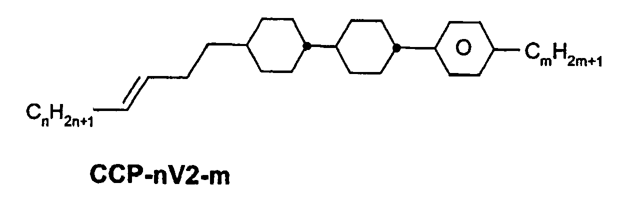 | |
| 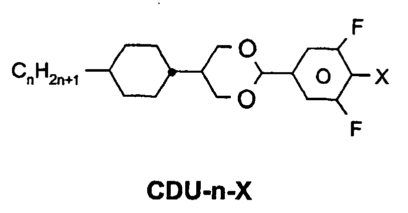 | 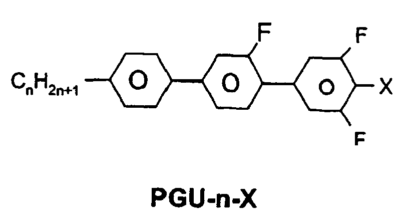 |
| (X = F, Cl, OCF3) | (X = F, Cl, OCF3) |

The liquid crystal media according to the instant invention do contain preferably
- seven or more, preferably eight or more compounds, preferably of different formulae, selected from the group of compounds of tables A and B and/or
- three or more, preferably four or more compounds, preferably of different formulae, selected from the group of compounds of table A and/or
- two or more, preferably three or more compounds, preferably of different formulae, selected from the group of compounds of table B.

### Examples

The examples given in the following are illustrating the present invention.

### Example 1

A liquid crystal mixture is realized with the composition and properties given in the following table.

| Composition | | | Physical Properties | |
|---|---|---|---|---|
| Compound | | | T(N,I) | = 75 °C |
| No. | Abbreviation | Conc. /% | T(S,N) | = <-20 °C |
| 1 | CDU-2-F | 11.0 | nₑ (20 °C, 589.3 nm) | = 1.5841 |
| 2 | CDU-3-F | 11.0 | Δn (20 °C, 589.3 nm) | = 0.1033 |
| 3 | PGU-2-F | 9.0 | ε\|\| (20 °C, 1 kHz) | = 17.5 |
| 4 | PGU-3-F | 8.5 | Δε (20 °C, 1 kHz) | = 12.5 |
| 5 | CGZP-2-OT* | 6.0 | γ₁ (20°C) | = 118 mPa·s |
| 6 | CGZP-3-OT* | 8.0 | | |
| 7 | CCZU-3-F | 11.0 | | |
| 8 | PCH-301 | 9.0 | | |
| 9 | CC-5-V | 6.5 | | |
| 10 | CC-3-V1 | 10.0 | | |
| 11 | CP-30CF3 | 10.0 | | |
| Σ | | 100.0 | | |

| | | | | |
|---|---|---|---|---|
| * OT means OCF₃. | | | | |

This mixture has a favourably low value of Δn and a high value of Δε and is very well suited for displays operating in the IPS mode.

### Example 2

A liquid crystal mixture is realized with the composition and properties given in the following table.

| Composition | | | Physical Properties | |
|---|---|---|---|---|
| Compound | | | T(N,I) | = 75 °C |
| No. | Abbreviation | Conc./% | T(S,N) | = <-20 °C |
| 1 | CDU-2-F | 10.5 | nₑ (20 °C, 589.3 nm) | = 1.5846 |
| 2 | CDU-3-F | 11.0 | Δn (20°C,589.3nm) | = 0.1033 |
| 3 | PGU-2-F | 10.0 | ε \|\| (20 °C, 1 kHz) | = 17.3 |
| 4 | PGU-3-F | 10.0 | Δε (20 °C, 1 kHz) | = 12.4 |
| 5 | CGZP-2-OT | 6.5 | γ₁ (20 °C) | = 116 mPa·s |
| 6 | CGZP-3-OT | 7.5 | | |
| 7 | CCZU-3-F | 9.5 | | |
| 8 | CCH-301 | 9.0 | | |
| 9 | CC-5-V | 6.0 | | |
| 10 | CC-3-V1 | 10.0 | | |
| 11 | CCP-V-1 | 4.0 | | |
| 12 | CP-30CF3 | 6.0 | | |
| Σ | | 100.0 | | |

This mixture has a favourably low value of Δn and a high value of Δε and is very well suited for displays operating in the IPS mode.

### Example 3

A liquid crystal mixture is realized with the composition and properties given in the following table.

| Composition | | | Physical Properties | |
|---|---|---|---|---|
| Compound | | | T(N,I) | = 75 °C |
| No. | Abbreviation | Conc. /% | T(S,N) | = <-20 °C |
| 1 | CDU-2-F | 10.0 | nₑ (20 °C, 589.3 nm) | = 1.5828 |
| 2 | CDU-3-F | 10.0 | Δn (20°C,589.3nm) | = 0.1033 |
| 3 | PGU-2-F | 10.0 | ε \|\| (20 °C, 1 kHz) | = 17.2 |
| 4 | PGU-3-F | 10.0 | Δε (20 °C, 1 kHz) | = 12.5 |
| 5 | CGZP-2-OT | 7.0 | γ₁ (20 °C) | = 96 mPa·s |
| 6 | CGZP-3-OT | 8.0 | | |
| 7 | CCZU-3-F | 9.0 | | |
| 8 | CC-3-V | 17.0 | | |
| 9 | CC-3-V1 | 10.0 | | |
| 10 | CP-30CF3 | 9.0 | | |
| Σ | | 100.0 | | |

This mixture has a favourably low value of Δn and a high value of Δε and is very well suited for displays operating in the IPS mode.

### Example 4

A liquid crystal mixture is realized with the composition and properties given in the following table.

| Composition | | | Physical Properties | |
|---|---|---|---|---|
| Compound | | | T(N,I) | = 75 °C |
| No. | Abbreviation | Conc. /% | T(S,N) | = <-20 °C |
| 1 | CDU-2-F | 10.50 | nₑ (20 °C, 589.3 nm) | = 1.5846 |
| 2 | CDU-3-F | 11.00 | Δn (20 °C, 589.3 nm) | = 0.1032 |
| 3 | PGU-2-F | 10.25 | ε \|\| (20 °C, 1 kHz) | = 17.3 |
| 4 | PGU-3-F | 10.00 | Δε (20 °C, 1 kHz) | = 12.5 |
| 5 | CGZP-2-OT | 5.00 | γ₁ (20 °C) | = 106 mPa·s |
| 6 | CGZP-3-OT | 7.75 | | |
| 7 | CCZU-3-F | 10.50 | | |
| 8 | CCH-501 | 4.50 | | |
| 9 | CC-5-V | 11.0 | | |
| 10 | CC-3-V1 | 3.0 | | |
| 11 | CCP-V-1 | 3.00 | | |
| 12 | CCP-30CF3 | 3.50 | | |
| 13 | CP-30CF3 | 3.00 | | |
| Σ | | 100.0 | | |

This mixture has a favourably low value of Δn and a high value of Δε and is very well suited for displays operating in the IPS mode.

### Example 5

A liquid crystal mixture is realized with the composition and properties given in the following table.

| Composition | | | Physical Properties | |
|---|---|---|---|---|
| Compound | | | T(N,I) | = 75 °C |
| No. | Abbreviation | Conc. /% | T(S,N) | = <-30 °C |
| 1 | CDU-2-F | 10.0 | nₑ (20 °C, 589.3 nm) | = 1.5862 |
| 2 | CDU-3-F | 11.0 | Δn(20 °C, 589.3 nm) | = 0.1042 |
| 3 | PGU-2-F | 10.0 | ε \|\| (20 °C, 1 kHz) | = 17.5 |
| 4 | PGU-3-F | 10.0 | Δε (20 °C, 1 kHz) | = 12.6 |
| 5 | CGZP-2-OT | 7.0 | | |
| 6 | CGZP-3-OT | 8.0 | | |
| 7 | CCZU-3-F | 9.0 | | |
| 8 | CCH-501 | 9.0 | | |
| 9 | CC-5-V | 6.0 | | |
| 10 | CC-3-V1 | 10.0 | | |
| 11 | CCP-V-1 | 5.0 | | |
| 12 | CP-30CF3 | 3.0 | | |
| Σ | | 100.0 | | |

This mixture has a favourably low value of Δn and a high value of Δε and is very well suited for displays operating in the IPS mode.

### Example 6

A liquid crystal mixture is realized with the composition and properties given in the following table.

| Composition | | | Physical Properties | |
|---|---|---|---|---|
| Compound | | | T(N,I) | = 75 °C |
| No. | Abbreviation | Conc. /% | T(S,N) | = <-30 °C |
| 1 | CDU-2-F | 10.0 | nₑ (20 °C, 589.3 nm) | = 1.5854 |
| 2 | CDU-3-F | 11.0 | Δn (20°C, 589.3nm) | = 0.1044 |
| 3 | PGU-2-F | 9.0 | ε\|\| (20 °C, 1 kHz) | = 17.5 |
| 4 | PGU-3-F | 9.0 | Δε (20 °C, 1 kHz) | = 12.5 |
| 5 | CGZP-2-OT | 7.0 | | |
| 6 | CGZP-3-OT | 8.0 | | |
| 7 | CCZU-3-F | 10.0 | | |
| 8 | PCH-501 | 9.0 | | |
| 9 | CC-5-V | 7.0 | | |
| 10 | CC-3-V1 | 10.0 | | |
| 11 | CP-30CF3 | 10.0 | | |
| ∑ | | 100.0 | | |

This mixture has a favourably low value of Δn and a high value of Δε and is very well suited for displays operating in the IPS mode.

### Example 7

A liquid crystal mixture is realized with the composition and properties given in the following table.

| Composition | | | Physical Properties | |
|---|---|---|---|---|
| Compound | | | T(N,I) | = 75 °C |
| No. | Abbreviation | Conc./% | T(S,N) | = <-20 °C |
| 1 | CDU-2-F | 11.0 | nₑ (20 °C, 589.3 nm) | = 1.5832 |
| 2 | CDU-3-F | 11.0 | Δn (20 °C, 589.3 nm) | = 0.1020 |
| 3 | PGU-2-F | 10.0 | ε\|\| (20 °C, 1 kHz) | = 17.1 |
| 4 | PGU-3-F | 10.0 | Δε (20 °C, 1 kHz) | = 12.5 |
| 5 | CGZP-2-OT | 3.0 | γ₁ (20°C) | = 102 mPa·s |
| 6 | CGZP-3-OT | 8.0 | | |
| 7 | CCZU-3-F | 12.0 | | |
| 8 | CC-5-V | 16.0 | | |
| 9 | CC-3-V1 | 10.0 | | |
| 10 | CCP-V-1 | 2.0 | | |
| 11 | CP-30CF3 | 7.0 | | |
| Σ | | 100.0 | | |

This mixture has a favourably low value of Δn and a high value of Δε and is very well suited for displays operating in the IPS mode.

### Example 8

A liquid crystal mixture is realized with the composition and properties given in the following table.

| Composition | | | Physical Properties | |
|---|---|---|---|---|
| Compound | | | T(N,I) | = 75 °C |
| No. | Abbreviation | Conc. /% | T(S,N) | = <-20 °C |
| 1 | CDU-2-F | 10.5 | nₑ (20 °C, 589.3 nm) | = 1.5832 |
| 2 | CDU-3-F | 11.0 | Δn(20 °C, 589.3nm) | = 0.1033 |
| 3 | PGU-2-F | 10.5 | ε\|\| (20 °C, 1 kHz) | = 17.1 |
| 4 | PGU-3-F | 10.0 | Δε (20 °C, 1 kHz) | = 12.5 |
| 5 | CGZP-2-OT | 3.5 | γ₁ (20°C) | = 103 mPa·s |
| 6 | CGZP-3-OT | 8.0 | | |
| 7 | CCZU-3-F | 11.5 | | |
| 8 | CC-5-V | 16.0 | | |
| 9 | CC-3-V1 | 10.0 | | |
| 10 | CCP-V-1 | 2.0 | | |
| 11 | CP-30CF3 | 7.0 | | |
| Σ | | 100.0 | | |

This mixture has a favourably low value of Δn and a high value of Δε and is very well suited for displays operating in the IPS mode.

### Example 9

A liquid crystal mixture is realized with the composition and properties given in the following table.

| Composition | | | Physical Properties | |
|---|---|---|---|---|
| Compound | | | T(N,I) | = 75 °C |
| No. | Abbreviation | Conc. /% | T(S,N) | = <-20 °C |
| 1 | CDU-2-F | 10.0 | nₑ (20 °C, 589.3 nm) | = 1.5843 |
| 2 | CDU-3-F | 11.0 | Δn (20 °C, 589.3 nm) | = 0.1033 |
| 3 | PGU-2-F | 10.0 | ε \|\| (20 °C, 1 kHz) | = 17.1 |
| 4 | PGU-3-F | 10.0 | Δε (20 °C, 1 kHz) | = 12.2 |
| 5 | CGZP-2-OT | 6.0 | | |
| 6 | CGZP-3-OT | 8.0 | | |
| 7 | CCZU-3-F | 8.5 | | |
| 8 | CCH-501 | 9.0 | | |
| 9 | CC-5-V | 7.0 | | |
| 10 | CC-3-V1 | 10.0 | | |
| 11 | CCP-V-1 | 4.0 | | |
| 12 | CP-30CF3 | 6.5 | | |
| Σ | | 100.0 | | |

This mixture has a favourably low value of Δn and a high value of Δε and is very well suited for displays operating in the IPS mode.

### Example 10

A liquid crystal mixture is realized with the composition and properties given in the following table.

| Composition | | | Physical Properties | |
|---|---|---|---|---|
| Compound | | | T(N,I) | = 74 °C |
| No. | Abbreviation | Conc. /% | T(S,N) | = <-20 °C |
| 1 | CDU-2-F | 11.0 | nₑ (20 °C, 589.3 nm) | = 1.5841 |
| 2 | CDU-3-F | 11.0 | Δn(20°C,589.3nm) | = 0.1030 |
| 3 | PGU-2-F | 9.0 | ε \|\| (20 °C, 1 kHz) | = 17.5 |
| 4 | PGU-3-F | 8.5 | Δε (20 °C, 1 kHz) | = 12.5 |
| 5 | CGZP-2-OT | 7.0 | | |
| 6 | CGZP-3-OT | 7.0 | | |
| 7 | CCZU-3-F | 11.0 | | |
| 8 | PCH-301 | 9.0 | | |
| 9 | CC-5-V | 6.5 | | |
| 10 | CC-3-V 1 | 10.0 | | |
| 11 | CP-30CF3 | 10.0 | | |
| Σ | | 100.0 | | |

This mixture has a favourably low value of Δn and a high value of Δε and is very well suited for displays operating in the IPS mode.

### Example 11

A liquid crystal mixture is realized with the composition and properties given in the following table.

| Composition | | | Physical Properties | |
|---|---|---|---|---|
| Compound | | | T(N,I) | = 76 °C |
| No. | Abbreviation | Conc./% | T(S,N) | = <-20 °C |
| 1 | CDU-2-F | 10.0 | nₑ (20 °C, 589.3 nm) | = 1.5824 |
| 2 | CDU-3-F | 10.0 | Δn (20 °C, 589.3 nm) | = 0.1030 |
| 3 | PGU-2-F | 10.0 | ε \|\| (20 °C, 1 kHz) | = 17.0 |
| 4 | PGU-3-F | 10.0 | Δε (20 °C, 1 kHz) | = 12.3 |
| 5 | CGZP-2-OT | 6.0 | | |
| 6 | CGZP-3-OT | 8.0 | | |
| 7 | CCZU-3-F | 9.0 | | |
| 8 | CC-3-V | 17.0 | | |
| 9 | CC-3-V1 | 10.0 | | |
| 10 | CP-30CF3 | 10.0 | | |
| Σ | | 100.0 | | |

This mixture has a favourably low value of Δn and a high value of Δε and is very well suited for displays operating in the IPS mode.

## Claims

1. Liquid crystal medium, **characterized in that** it comprises a dielectrically positive component A with Δε > 3.0 comprising one or more dielectrically positive compounds of formula I 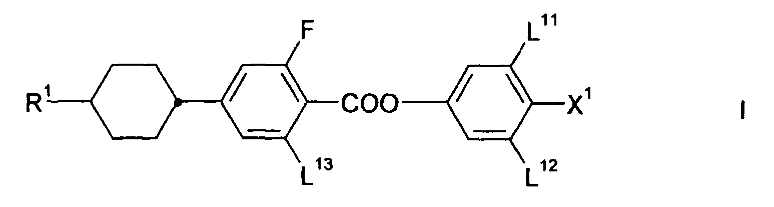 wherein
R¹ is alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms,
X¹ is F or fluorinated alkyl or fluorinated alkoxy, each with 1 to 4 C-atoms,
L¹¹, L¹² and L¹³ are, independently of each other, H or F and
one or more dielectrically positive compounds of formula II and one or more dielectrically positive compounds of formula III 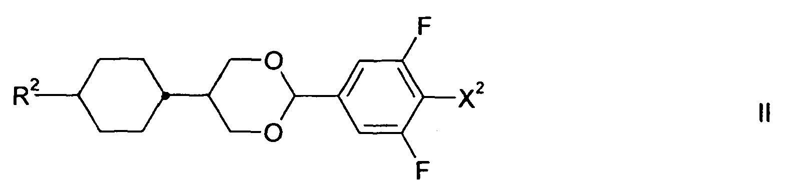 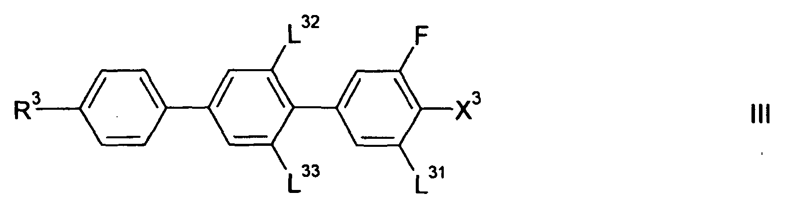 wherein
R² and R³ independently of each other, are alkyl, alkoxy, fluorinated alkyl or fluorinated alkoxy with 1 to 7 C- atoms, alkenyl, alkenyloxy, alkoxyalkyl or fluorinated alkenyl with 2 to 7 C-atoms,
X² and X³ independently of each other, are F or fluorinated alkyl or fluorinated alkoxy, each with 1 to 4 C-atoms,
L³¹, L³² and L³³ are, independently of each other, H or F.

2. Liquid crystal medium according to claim 1, **characterized in that** it comprises one or more compounds of formula IV 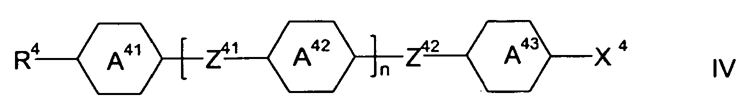 wherein 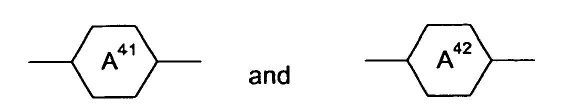 independently of each other, and in case 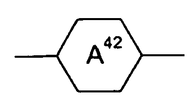 is present twice, also these, independently of each other, are 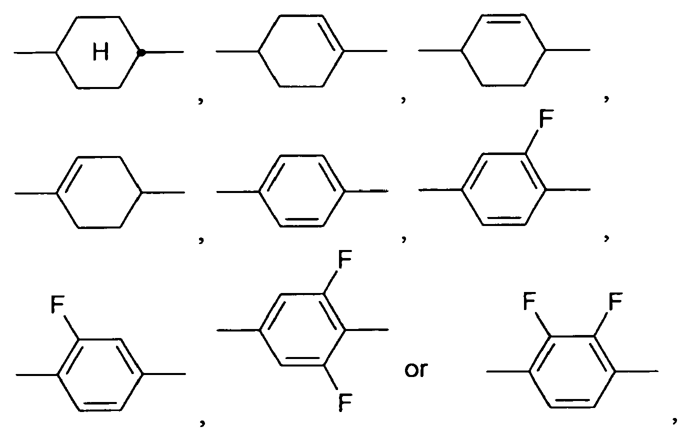 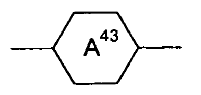 is 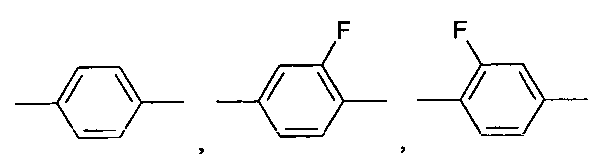 or 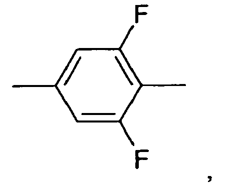
Z⁴¹ and Z⁴² are, independently of each other, and in case Z⁴¹ is present twice, also these independently of each other, - CH₂CH₂-, -COO-, trans- CH=CH-, trans- -CF=CF-, - CH₂O-, -CF₂O- or a single bond, preferably at least one of them is a single bond and most preferably, if present, at least two of them are a single bond,
X⁴ is F, Cl halogenated alkyl, halogenated alkoxy, halogenated alkenyl or halogenated alkenyloxy, wherein halogenated preferably is fluorinated and/or chlorinated, preferably fluorinated and preferably X⁴ is F, OCF₃ or OCF₂H,
R⁴ has the meaning given for R¹ under formula I, above
n is 0, 1 or 2, preferably 0 or 1.

3. Liquid crystal medium according to at least one of claims 1 and 2, **characterized in that** it comprises a dielectrically neutral component B with -1.5 ≤ Δε ≤ 3.0 comprising one or more compounds of formula V 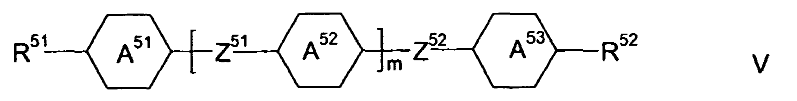 wherein
R⁵¹ and R⁵², independently of each other, have the meaning given for R¹ under formula above, 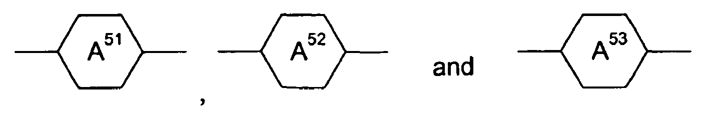
independently of each other, and in case 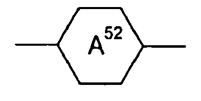 is present twice, also these, independently of each other, are 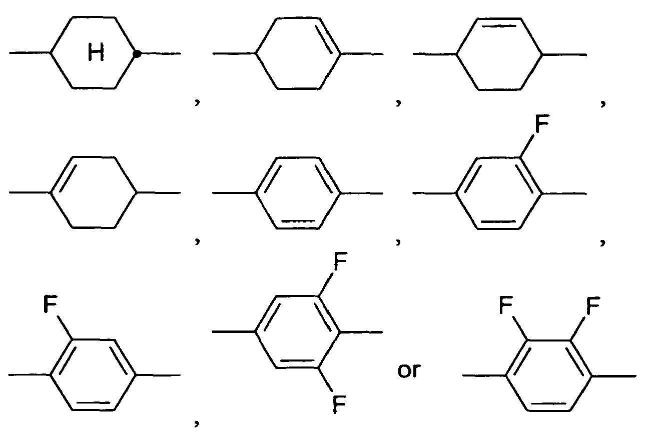
Z⁵¹ and Z⁵² are, independently of each other, and in case Z⁵¹ is present twice, also these independently of each other, -CH₂CH₂-, -COO-, trans- CH=CH-, trans- -CF=CF-, - CH₂O-, -CF₂O- or a single bond, preferably at least one of them is a single bond and most preferably, if present, at least two of them are a single bond,
m is 0, 1 or 2.

4. Liquid crystal medium according to at least one of claims 1 to 3, **characterized in that** it comprises a dielectrically negative component C with Δε < 1.5.

5. Liquid crystal medium according to at least one of claims 1 to 4, **characterized in that** it comprises one or more compounds of formula IIa 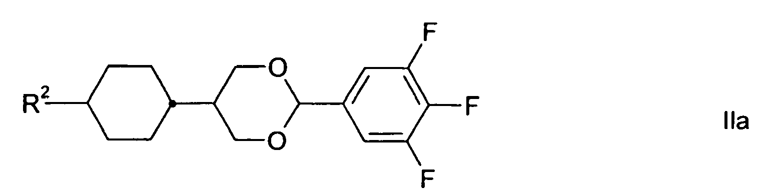 wherein R² has the meaning given in claim 1.

6. Liquid crystal medium according to at least one of claims 1 to 5, **characterized in that** it comprises one or more compounds selected from the group of compounds of formulae IIIa to IIIc 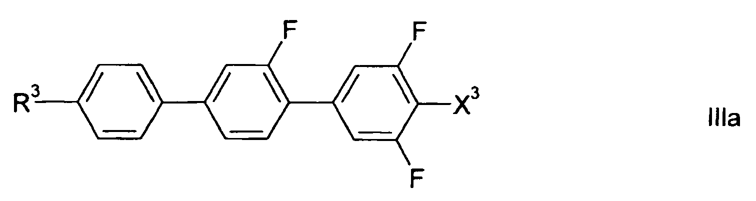 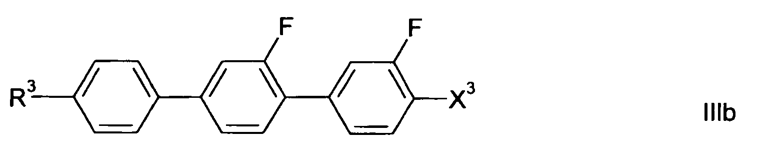 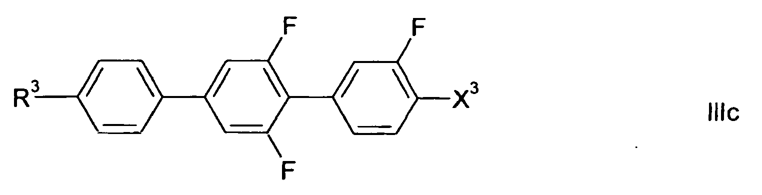 wherein the parameters have the meaning given in claim 1 and X³ is preferably F.

7. Liquid crystal display, **characterized in that** it comprises a liquid crystal medium according to at least one of claims 1 to 6.

8. Liquid crystal display according to claim 7, **characterized in that** it is addressed by an active matrix.

9. Use of a liquid crystal medium according to at least one of claims 1 to 6 in a liquid crystal display.

## Patentansprüche

1. Flüssigkristallmedium, **dadurch gekennzeichnet, dass** es eine dielektrisch positive Komponente A mit Δε > 3,0 enthaltend eine oder mehrere dielektrisch positive Verbindungen der Formel I 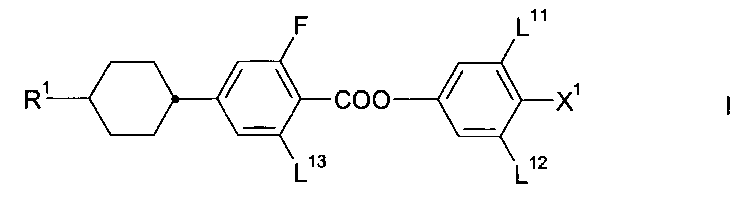 worin
R¹ Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeutet,
X¹ F oder fluoriertes Alkyl oder fluoriertes Alkoxy, jeweils mit 1 bis 4 C-Atomen, bedeutet,
L¹¹, L¹² und L¹³ unabhängig voneinander H oder F bedeuten, und
eine oder mehrere dielektrisch positive Verbindungen der Formel II und eine oder mehrere dielektrisch positive Verbindungen der Formel III 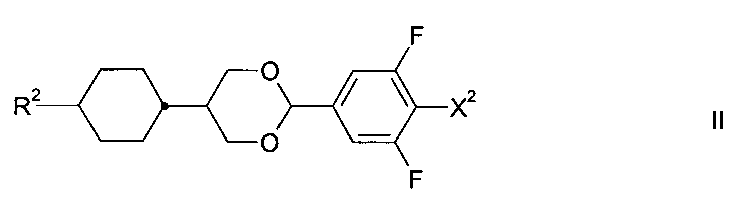 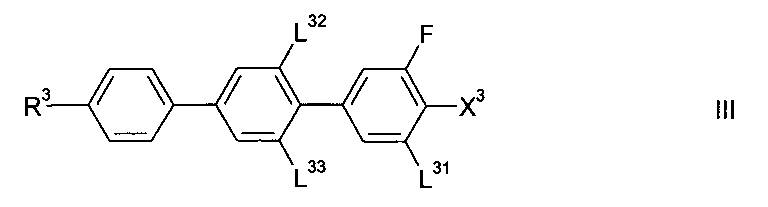 worin
R² und R³ unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten,
X² und X³ unabhängig voneinander F oder fluoriertes Alkyl oder fluoriertes Alkoxy, jeweils mit 1 bis 4 C-Atomen, bedeuten,
L³¹, L³² und L³³ unabhängig voneinander H oder F bedeuten,
enthält.

2. Flüssigkristallmedium nach Anspruch 1, **dadurch gekennzeichnet, dass** es eine oder mehrere Verbindungen der Formel IV 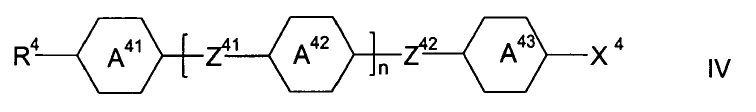 enthält, worin 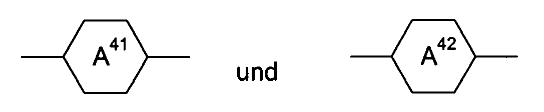 unabhängig voneinander und bei zweifachem Auftreten von 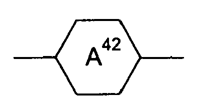 auch diese unabhängig voneinander 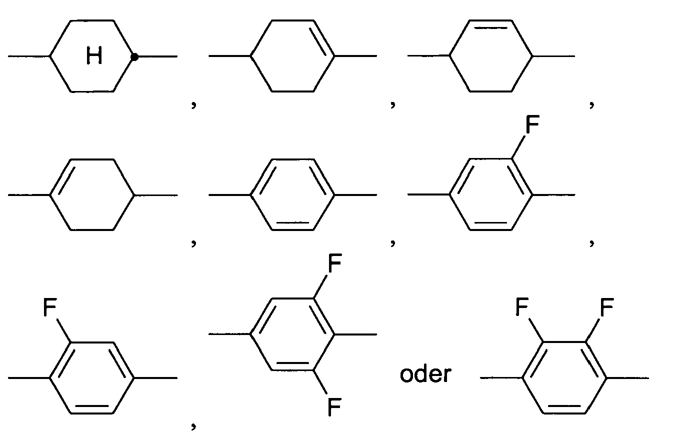 bedeuten, 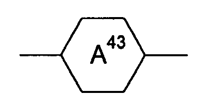 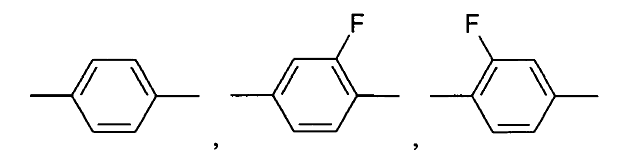 oder 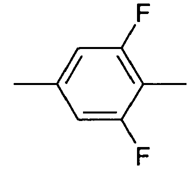 bedeutet,
Z⁴¹ und Z⁴² unabhängig voneinander und bei zweifachem Auftreten von Z⁴¹ auch diese unabhängig voneinander -CH₂CH₂-, -COO-, trans- CH=CH-, trans- -CF=CF-, -CH₂O-, -CF₂O- oder eine Einfachbindung bedeuten, vorzugsweise mindestens eines von ihnen eine Einfachbindung bedeutet und ganz bevorzugt, wenn vorhanden, mindestens zwei von ihnen eine Einfachbindung bedeuten,
X⁴ F, Cl, halogeniertes Alkyl, halogeniertes Alkoxy, halogeniertes Alkenyl oder halogeniertes Alkenyloxy bedeutet, worin halogeniert vorzugsweise fluoriert und/oder chloriert, vorzugsweise fluoriert bedeutet und X⁴ vorzugsweise F, OCF₃ oder OCF₂H bedeutet,
R⁴ die oben unter Formel I für R¹ angegebene Bedeutung besitzt,
n 0, 1 oder 2, vorzugsweise 0 oder 1 bedeutet.

3. Flüssigkristallmedium nach mindestens einem der Ansprüche 1 und 2, **dadurch gekennzeichnet, dass** es eine dielektrisch neutrale Komponente B mit -1,5 ≤ Δε≤ 3,0 enthaltend eine oder mehrere Verbindungen der Formel V 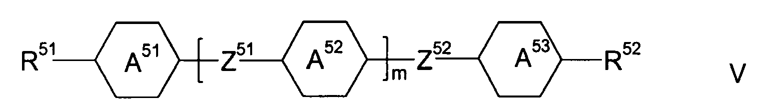 worin
R⁵¹ und R⁵² unabhängig voneinander die oben unter Formel I für R¹ angegebene Bedeutung besitzen, 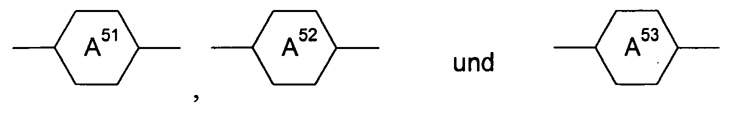
unabhängig voneinander und bei zweifachem Auftreten von 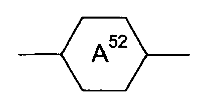 auch diese unabhängig voneinander 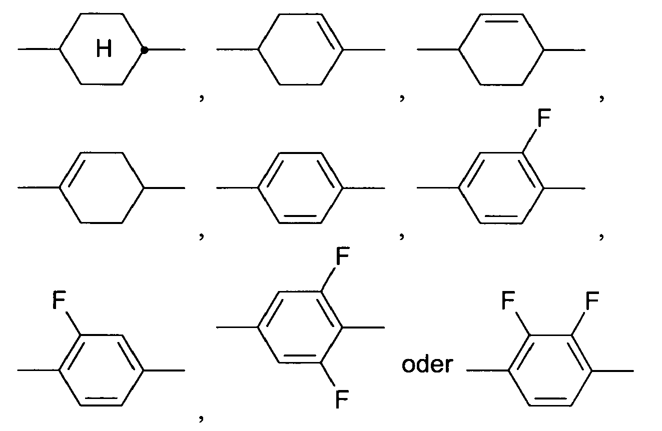 bedeuten,
Z⁵¹ und Z⁵² unabhängig voneinander und bei zweifachem Auftreten von Z⁵¹ auch diese unabhängig voneinander -CH₂CH₂-, -COO-, trans- CH=CH-, trans- -CF=CF-, -CH₂O-, -CF₂O- oder eine Einfachbindung bedeuten, vorzugsweise mindestens eines von ihnen eine Einfachbindung bedeutet und ganz bevorzugt, wenn vorhanden, mindestens zwei von ihnen eine Einfachbindung bedeuten,
m 0, 1 oder 2 bedeutet,
enthält.

4. Flüssigkristallmedium nach mindestens einem der Ansprüche 1 bis 3, **dadurch gekennzeichnet, dass** es eine dielektrisch negative Komponente C mit Δε < 1,5 enthält.

5. Flüssigkristallmedium nach mindestens einem der Ansprüche 1 bis 4, **dadurch gekennzeichnet, dass** es eine oder mehrere Verbindungen der Formel IIa 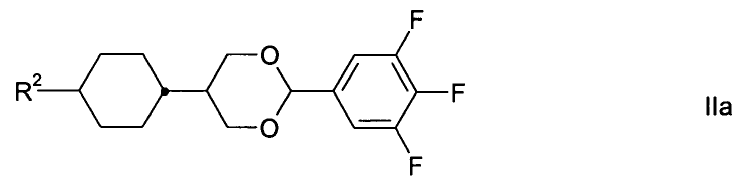 enthält, worin R² die in Anspruch 1 angegebene Bedeutung besitzt.

6. Flüssigkristallmedium nach mindestens einem der Ansprüche 1 bis 5, **dadurch gekennzeichnet, dass** es eine oder mehrere Verbindungen ausgewählt aus der Gruppe der Verbindungen der Formeln IIIa bis IIIc 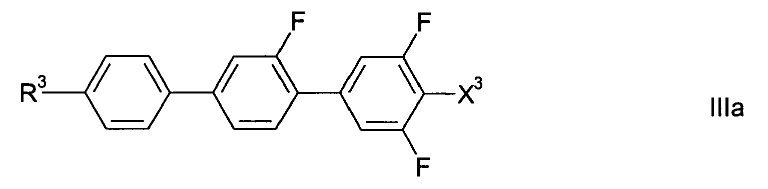 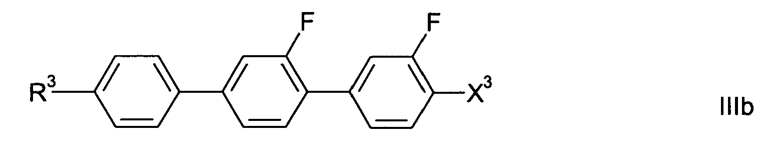 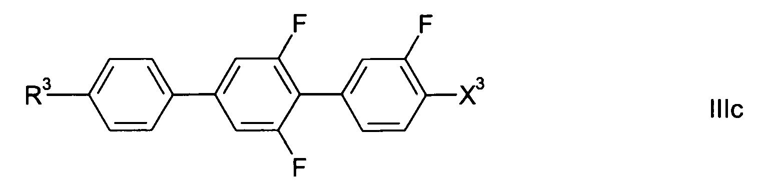 enthält, worin die Parameter die in Anspruch 1 angegebene Bedeutung besitzen und X³ vorzugsweise F bedeutet.

7. Flüssigkristallanzeige, **dadurch gekennzeichnet, dass** sie ein Flüssigkristallmedium nach mindestens einem der Ansprüche 1 bis 6 enthält.

8. Flüssigkristallanzeige nach Anspruch 7, **dadurch gekennzeichnet, dass** sie durch eine Aktivmatrix adressiert wird.

9. Verwendung eines Flüssigkristallmediums nach mindestens einem der Ansprüche 1 bis 6 in einer Flüssigkristallanzeige.

## Revendications

1. Milieu de cristal liquide, **caractérisé en ce qu'**il comprend un composant diélectriquement positif A avec Δε > 3,0 comprenant un ou plusieurs composés diélectriquement positifs de la formule I 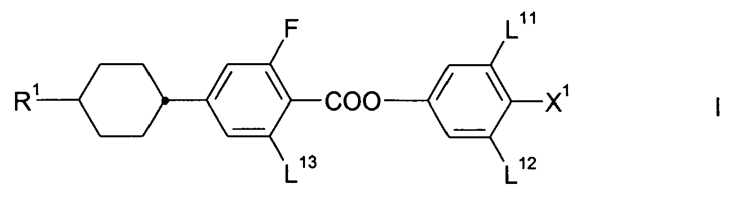 dans laquelle
R¹ est alkyle, alkoxy, alkyle fluoré ou alkoxy fluoré avec 1 à 7 atomes de C, alkényle, alkényloxy, alkoxyalkyle ou alkényle fluoré avec 2 à 7 atomes de C,
X¹ est F ou alkyle fluoré ou alkoxy fluoré, chacun avec 1 à 4 atomes de C,
L¹¹, L¹² et L¹³ sont, indépendamment les uns des autres, H ou F et
un ou plusieurs composés diélectriquement positifs de la formule Il et un ou plusieurs composés diélectriquement positifs de la formule III 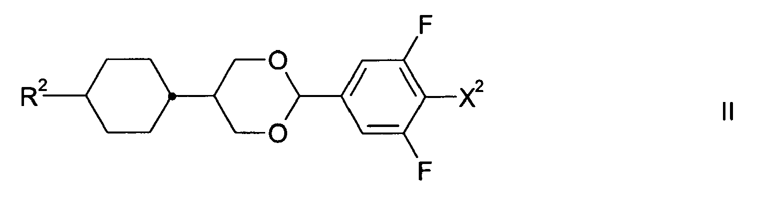 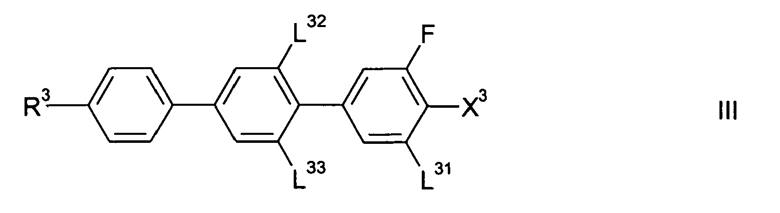 dans lesquelles
R² et R³ indépendamment l'un de l'autre, sont alkyle, alkoxy, alkyle fluoré ou alkoxy fluoré avec 1 à 7 atomes de C, alkényle, alkényloxy, alkoxyalkyle ou alkényle fluoré avec 2 à 7 atomes de C,
X² et X³ indépendamment l'un de l'autre, sont F ou alkyle fluoré ou alkoxy fluoré, chacun avec 1 à 4 atomes de C,
L³¹, L³² et L³³ sont, indépendamment les uns des autres, H ou F.

2. Milieu de cristal liquide selon la revendication 1, **caractérisé en ce qu'**il comprend un ou plusieurs composés de la formule IV 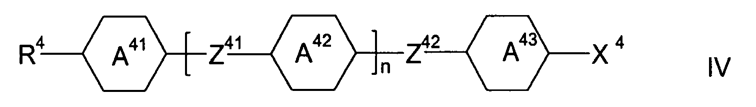 dans laquelle 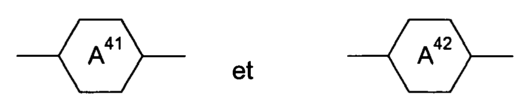 indépendamment l'un de l'autre, et dans le cas où 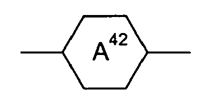 est présent deux fois, les composés suivants, indépendamment les uns des autres, sont aussi 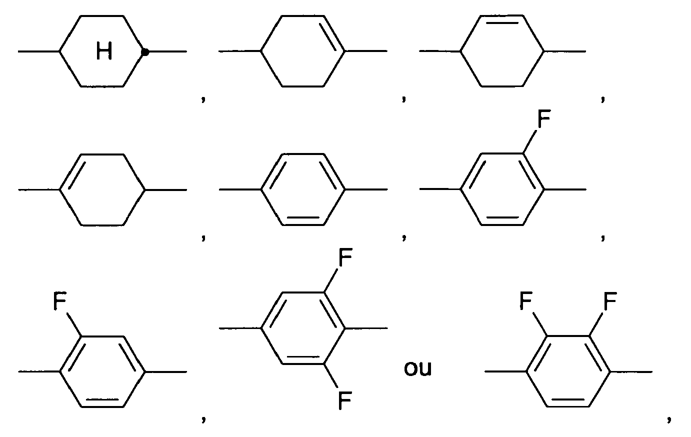 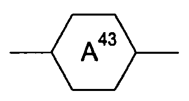 est 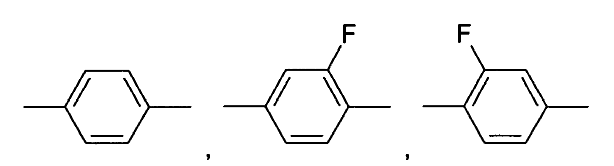 ou 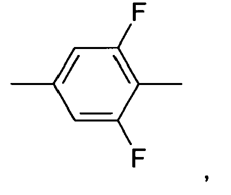
Z⁴¹ et Z⁴² sont, indépendamment l'un de l'autre, et dans le cas où Z⁴¹ est présent deux fois, les composés suivants, indépendamment les uns des autres, -CH₂CH₂-, -COO-, trans- CH=CH-, trans- -CF=CF-, -CH₂O- -CF₂O- ou une liaison simple, de préférence au moins l'un d'entre eux est une liaison simple et de façon davantage préférable, s'ils sont présents, au moins deux d'entre eux sont une liaison simple,
X⁴ est F, CI, alkyle halogéné, alkoxy halogéné, alkényle halogéné ou alkényloxy halogéné, où halogéné est de préférence fluoré et/ou chloré, de préférence fluoré et de préférence X⁴ est F, OCF₃ ou OCF₂H,
R⁴ a la signification donnée pour R¹ selon la formule I ci-avant
n est 0, 1 ou 2, de préférence 0 ou 1.

3. Milieu de cristal liquide selon au moins l'une des revendications 1 et 2, **caractérisé en ce qu'**il comprend un composé diélectriquement neutre B avec -1,5 ≤ Δε ≤ 3,0 comprenant un ou plusieurs composés de la formule V 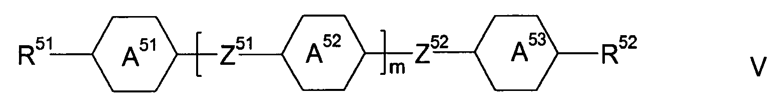 dans laquelle
R⁵¹ et R⁵² indépendamment l'un de l'autre, ont la signification donnée pour R¹ selon la formule I ci-avant, 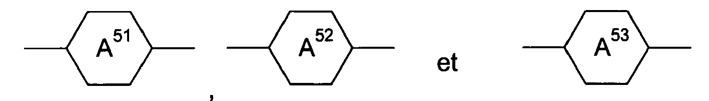
indépendamment l'un de l'autre, et dans le cas où 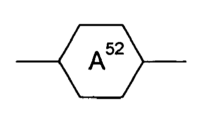 est présent deux fois, les composés suivants, indépendamment les uns des autres, sont aussi 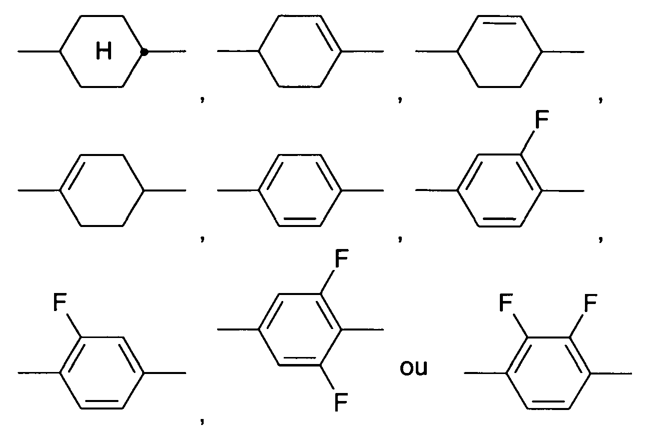
Z⁵¹ et Z⁵² sont, indépendamment l'un de l'autre, et dans le cas où Z⁵¹ est présent deux fois, les composés suivants, indépendamment les uns des autres, -CH₂CH₂-, -COO-, trans- CH=CH-, trans- -CF=CF-, -CH₂O- -CF₂O- ou une liaison simple, de préférence au moins l'un d'entre eux est une liaison simple et de façon davantage préférable, s'ils sont présents, au moins deux d'entre eux sont une liaison simple,
m est 0, 1 ou 2.

4. Milieu de cristal liquide selon au moins l'une des revendications 1 à 3, **caractérisé en ce qu'**il comprend un composé diélectriquement négatif C avec Δε < 1,5.

5. Milieu de cristal liquide selon au moins l'une des revendications 1 à 4, **caractérisé en ce qu'**il comprend un ou plusieurs composés de la formule IIa 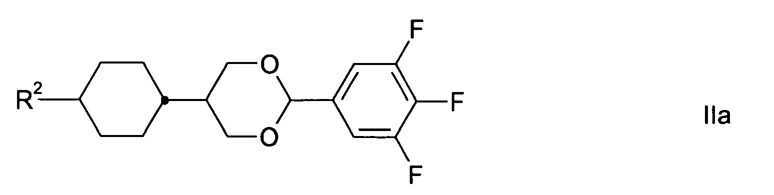 dans laquelle R² a la signification donnée dans la revendication 1.

6. Milieu de cristal liquide selon au moins l'une des revendications 1 à 5, **caractérisé en ce qu'**il comprend un ou plusieurs composés choisis parmi le groupe des composés des formules IIIa à IIIc 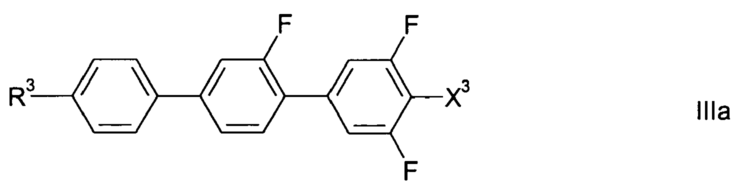 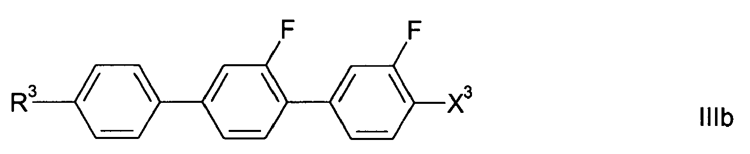 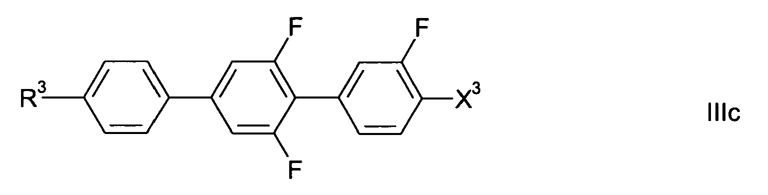 dans lesquelles les paramètres ont la signification donnée dans la revendication 1 et X³ est de préférence F.

7. Affichage à cristaux liquides, **caractérisé en ce qu'**il comprend un milieu de cristal liquide selon au moins l'une des revendications 1 à 6.

8. Affichage à cristaux liquides selon la revendication 7, **caractérisé en ce qu'**il est adressé par une matrice active.

9. Utilisation d'un milieu de cristal liquide selon au moins l'une des revendications 1 à 6 dans un affichage à cristaux liquides.
